(19) Europäisches Patentamt
European Patent Office
Office européen des brevets

(11) **EP 0 655 084 B1**

(12) **EUROPEAN PATENT SPECIFICATION**

(45) Date of publication and mention
of the grant of the patent:
**15.09.1999 Bulletin 1999/37**

(51) Int Cl.$^6$: **C10J 3/57**

(86) International application number:
**PCT/US93/02350**

(21) Application number: **93908347.3**

(22) Date of filing: **10.03.1993**

(87) International publication number:
**WO 94/04633 (03.03.1994 Gazette 1994/06)**

(54) **IMPROVED MOLTEN METAL DECOMPOSITION APPARATUS AND PROCESS**

VERBESSERTE METALLSCHNELZBADZERSETZUNGSVORRICHTUNG UND VERFAHREN

APPAREIL ET PROCEDE PERFECTIONNES POUR LA DECOMPOSITION DE METAL EN FUSION

(84) Designated Contracting States:
**AT BE CH DE DK ES FR GB GR IE IT LI LU MC NL PT SE**

(30) Priority: **13.08.1992 US 930250**
**01.09.1992 US 939533**

(43) Date of publication of application:
**31.05.1995 Bulletin 1995/22**

(73) Proprietor: **ASHLAND INC.**
**Ashland, KY 41114 (US)**

(72) Inventors:
• **MALONE, Donald, P.**
**Grayson, KT 41143 (US)**
• **MILLER, Charles, B.**
**Ashland, KT 41101 (US)**

(74) Representative: **Nachshen, Neil Jacob**
**D Young & Co**
**21 New Fetter Lane**
**London EC4A 1DA (GB)**

(56) References cited:
DE-A- 2 248 292          DE-A- 2 443 740
DE-A- 2 521 080          DE-A- 2 620 462
FR-A- 2 552 443          GB-A- 666 119
GB-A- 2 189 504          US-A- 4 422 872

**Description**

The present invention relates to molten baths for the disassociation of material containing carbon and hydrogen.

Rasor U.S. 4,187,672 and U.S. 4,244,180 feed a mass of carbonaceous fuel; e.g., coal, into a high temperature liquid; e.g., molten iron, at a temperature high enough to carbonize the feed; e.g., near 2850°F (1565°C) and introduces air or other oxygen source into the reactor to react with carbon dissolved in the liquid and uses the hot fuel gas to produce useful energy.

WO 9Z/01492 to Nagel teaches two immiscible zones (layers) of different molten metal temperatures.

Mayes U.S. 4,338,096 teaches methods for controlling the flow of molten-mass reaction medium into a reaction zone by utilizing a gas-lift effect on the molten medium and apportioning the flow of control gas to the desired flow of molten medium. Mayes is not understood to suggest movement of liquid from one zone to another by means of convection.

Bach U.S. 4,574,714, and U.S. 4,602,574 do not suggest the plural zones of the present invention with organic feed introduced into one zone and oxidizer introduced into a second zone, and with the vapor phases and liquid phases of the two zones being separated by barriers as in the present invention.

Shin Melwa Ind. DE 2,521,080 shows a melt with electromagnetic circulation between oxidizing and gasification zones.

Tyrer U.S. 1,803,221 teaches production of hydrogen from methane in a two-zone unit, but provides no means for flow by convection between the two zones and does not suggest the specialized baffle separators of the present invention.

Vayssiere FR 2,186,524 teaches a melt with electromagnetic means for circulation between oxidizing and gasification zones.

Axelsson U.S. Patent 4,511,372 does his whole process in a single vessel at high pressure, primarily to suppress dust.

According to one aspect of the invention, there is provided a method of producing hydrogen- and carbon monoxide-containing gases from a carbon- and hydrogen-containing feed material, by pyrolysis of the feed material in a bath of molten metal, comprising

a) establishing baths of molten metal in each of two zones, a feed zone and an oxidation zone, each of the two zones comprising a gas collection zone above the bath of molten metal, said gas collection zones being separate one from the other, and comprising as the molten metal, a metal having a degree of solubility towards carbon;

b) establishing a circulatory flow of molten metal between the two zones based on the differential density of the molten metal in the two zones, the hotter, less dense metal flowing from the oxidation zone to the feed zone and the cooler, more dense metal flowing from the feed zone to the oxidation zone;

c) introducing the organic carbon-containing feed material into the molten metal in the feed zone;

d) pyrolising the feed material in the bath of molten metal in the feed zone to produce a hydrogen-containing gas in the gas collection zone above the bath of molten metal in the feed zone, and elemental carbon dissolved in the molten metal in the feed zone;

e) recovering the hydrogen-containing gas from the gas collection zone above the bath of molten metal in the feed zone;

f) introducing an oxygen-containing gas and optionally steam into the molten metal in the oxidation zone thereby to oxidise the dissolved carbon entering into the oxidation zone in solution in the molten metal passing into the oxidation zone from the feed zone to produce a carbon monoxide-containing gas in the gas collection zone above the bath of molten metal in the oxidation zone, and sufficient exothermic heat of reaction to raise the temperature and lower the density of the molten metal in the oxidation zone; and

g) recovering the carbon monoxide-containing gas from the gas collection zone above the bath of molten metal in the said oxidation zone.

According to another aspect of the invention, there is provided an apparatus for producing gases from feed material by the method of the invention, the apparatus comprising an elongate enclosed reactor vessel divided internally into two separate reaction zones at opposite ends of the reactor by an internal baffle system and, in use, containing a mass of the specified molten metal;

the said baffle system comprising a first baffle downwardly dependent from the top of the reactor vessel a sufficient distance that, in use, the bottom edge of the baffle extends into the mass of molten metal whilst stopping short of the bottom of the vessel, thereby to permit the underflow of molten metal from one zone to the other under the distal edge of the baffle, the said first baffle also serving also to divide the upper region of the reactor vessel above the level of the molten metal into two separate gas collection zones, and a second, L-shaped baffle having a first leg parallel to but spaced from the first baffle so as to form therewith a vertical chimney for the return upward flow of molten metal from the said other zone back to the said first zone, the said first leg having an upper distal edge spaced from the top of the reactor vessel and providing a lip over which the molten metal flows back into the first zone from the second zone, the second leg of the L-shaped baffle projecting from the bottom distal edge of the first leg substantially parallel to the base of the reactor under the bottom distal edge of the first baffle but spaced therefrom, and from the base of the reactor, so as to form with the bottom distal edge of the first baffle a through channel for the throughflow of said molten metal from said second zone into said chimney and back to the first zone, and forming with the base of the reactor vessel a second through channel for the said underflow of molten metal from the first zone to the second zone;

the reactor vessel further comprising feed means for feeding the organic carbon-containing feed material into the molten metal in the said first zone, feed means for feeding an oxygen-containing gas into the molten metal in the said second zone, venting means for recovering a stream of hydrogen-containing synthesis gas from the gas collection zone located above the molten metal contained in the first reaction zone, and venting means for recovering a stream of carbon monoxide-containing synthesis gas from the gas collection zone located above the molten metal in the second reaction zone.

According to yet another aspect of the invention, there is provided an apparatus for producing gases from feed material by the method of the invention, said apparatus comprising a pair of enclosed reaction vessels spaced one above the other and each containing, in use, a bath of the said molten metal with a gas collection zone thereabove, said reaction vessels being connected one to the other by a pair of conduits each providing a flow passage for the circulatory flow of metal between the two reaction vessels, one acting as a riser conduit and the other a return conduit, means for feeding the organic carbon-containing feed material into the molten metal bath contained in the upper of the two reaction vessels, means for feeding an oxygen-containing gas into the molten metal bath contained in the lower of the two reaction vessels, venting means for recovering a hydrogen-containing gas from the gas collection zone in the upper of the two reaction vessels, and venting means for recovering a carbon monoxide-containing gas from the gas collection zone in the lower of the two reaction vessels.

As hereinafter described in detail, a plural zone plant and process for converting a carbon source to synthesis gas comprising carbon monoxide and hydrogen is disclosed. The carbon source can be coal, automobile tires, hazardous organic wastes, such as chlorinated biphenyls, polyhaloginated organics, organometallics, organic polymers, garbage, sludge, trash, and other hydrocarbons is dissolved in a molten bath which can comprise iron in an oxygen deficient zone at one pressure and reacted with water, an oxygen source, or mixtures thereof in at least one other zone at higher temperatures and pressures from that present in the first zone. In one particularly advantageous embodiment, two zones are at different vertical heights and circulation from one zone to the other occurs as a result of differences in density between the molten bath in the lower zone compared to that in the upper zone.

When converting feeds containing hydrogen and carbon, such as propane, solvent deasphalted pitch, etc., into substantially pure hydrogen and $CO/CO_2$ streams under pressure by incorporating carbon into molten metal in a first zone, then circulating the molten metal into contact with an oxygen-containing gas in a second zone; a one-meter diameter vessel can produce 566,340 $m^3$/day (20 million standard cubic feet /day) of hydrogen at a pressure in the range 2 to 50 atm per day from methane using this invention.

In an improved molten metal hydrogen generation bath, baffles form a draft tube or chimney-effect separating the vapor space near the center of the bath. Flow through the chimney is aided by maintaining a temperature differential favoring convection and, optionally, a differential pressure between the portions of the bath on either side of the baffle-chimney arrangement. Feed is added to the feed zone and oxygen is added to the oxidation zone, emitting $H_2$ from the feed zone and CO from the oxidation zone. Baffles may be made simply of brick work or high temperature metal and can fit into existing refractory-lined molten metal vessels. Products can be mixed as syngas feed for Fischer-Tropsch synthesis. Additionally, the Boudouard endothermic reaction ($CO_2$ + C → 2CO) can be used to control temperatures by injecting $CO_2$ in place of oxygen.

Figure 1 is a schematic diagram of a particularly preferred embodiment showing a section view of the closed vessel **100** with the feed zone **104** and the oxidizing zone **106** separated by the chimney/hearth-like recycle zone **108** defined by downwardly extending baffle means **114**/horizontal extending baffle means **115** and vapor zone separator means **112**.

Figure 2 is a detail of the embodiment of Figure 1, showing the baffles **135** and **136**.

Figure 3 is a schematic diagram of the embodiment of Figure 1, showing the optional water-gas shift reactor **60**, Fisher-Tropsch reactor **64**, the optional Boudouard reactor **80** which occurs in the molten bath oxidizing zone **106**, and the removal of carbon dioxide by means of the Benfield or Pressure Swing Absorption processes.

Figure 4 is an overall schematic cross-sectional side elevation view of a second preferred embodiment; plant or an apparatus that can be used in this invention.

Figure 5 is an enlarged top elevation view of the apparatus of Figure 5 in cross-sectional along line A-A of Figure 4.

Figure 6 is an enlarged elevation view of the apparatus of Figure 5 in cross-section along line B-B of Figure 4.

Figure 7 is an enlarged but modified cross-sectional side elevation view as in Figure 4 of vessel 12.

Figure 8 is an enlarged but modified cross-sectional side elevation view as shown in Figure 4 of vessel 14.

Figure 9 is an overall schematic cross-sectional side elevation view of a plant or apparatus that can be used in this invention disclosing several modifications over that in Figure 4.

Figure 10 discloses a third preferred embodiment: a hydrogen plant somewhat similar to Figure 4 but having three baths shown in cross-section side elevation.

The present invention is useful for the production of a wide variety of end-products, including all those which can be produced by the well-known Fischer-Tropsch process, e.g., naphthas, diesel fuel, jet fuel (kerosene), as particularly commercialized by Sasol in South Africa. The Mobil Oil "M-Gas" process (U.S. 3,998,899, etc.) may be employed. At the present time, the invention will be particularly valuable for the flexible production of reformulated fuels as mandated or as desirable for protection of the environment, e.g., methanol, methyl tert-butyl ether (MTBE) and tert-amyl methyl ether (TAME), etc. In its preferred embodiments, the invention functions entirely from distress or low-valued hydrocarbons, air (for oxidation), and water (to supply hydrogen and additional oxygen). It is particularly noteworthy that the invention can utilize the exothermic carbon oxidation reaction so that it can function without need for external energy input. Additionally, the endothermic Boudouard reaction ($CO_2 + C \rightarrow 2CO$) can be used to control temperature within the two reaction zones, and particularly to control the differentials so as to adjust convection circulation of materials between the zones as desired.

Syngas uses, per Kirk-Othmer Encyclopedia of Chemical Technology, include: $CO/H_2$ without any other reactants as building blocks, e.g., glycol synthesis, modified Fischer-Tropsch syntheses to olefins or waxes, and acetic acid synthesis; those involving $CO/H_2$ and employed to make additional use of compounds derived from synthesis gas, e.g., homologation of methanol to ethanol; those that use a derivative based on $CO/H_2$, e.g., methanol, as a starting material for a further reaction sequence, e.g., Mobil's MTG (methanol to gasoline) process or the vinyl acetate process; and energy-efficient processes, e.g., those that make syngas for use in combined-cycle plants; and those that use the carbon monoxide for subsequent syntheses, e.g., of acetic anhydride, acrylates, Koch acids, etc.

Also the invention makes it possible to use a wide variety of feeds, whether hazardous or not, with a minimum of handling difficulties or problems. Other operational advantages include an easier heat-balance control that permits changes in the amount of hydrogen that may be produced. Failure to produce a minimum amount of hydrogen as required by conventional design results in an inoperative or difficult to operate hydrogen plant. The invention tolerates wide ranges of hydrogen outputs. For example, a plant designed in accordance with this invention, capable of producing 566340 $m^3$/day (20 million standard cubic feet/day) of hydrogen could be cut back from this maximum production to as little as 56,634 $m^3$/day (2 million standard cubic feet/day). If a conventionally designed hydrogen plant were designed for 566,340 $m^3$/day (20 million standard cubic feet/day), it could not have its production cut back much below 226,536 $m^3$/day (8 million standard cubic feet/day).

Hydrogen plants built in accordance with the invention can produce a higher purity of hydrogen than conventional plants because sulfur removal can be an integral feature of the invention's reaction vessel by providing a slag layer.

**Fischer-Tropsch Synthesis**

The preferred CO and $H_2$ products of the invention are useful for the conventional Fischer-Tropsch synthesis taught e.g., in Chemical Process Industries by R. Norris Schreve, McGraw-Hill, 1967, p. 775.

**Boudouard Reaction:**

This reaction, discussed in U.S. 4,412,914; 4,450,241; 4,869,879; and 4,915,820 all to W. P. Hettinger et. al, can optionally react injected $CO_2$ with carbon in the molten metal to form 2CO and cool the melt as desired.

**Metal:**

While iron is most preferred for the molten bath; for specialized applications, steels, copper, zinc, especially chromium, manganese, or nickel, or other meltable metal or other molten material in which carbon is somewhat soluble can be used alone or in mixture.

**Feed Materials:**

Natural gas ($CH_4$), liquified petroleum gas (LPG), propane, petroleum naphtha, light or heavy distillate, vacuum and other resids, solvent deasphalted pitch (SDA), aromatic extracts, FCC slurry oil; trash garbage, tires, coal and virtually any other hydrocarbon-containing material.

**Products:**

Products are CO, $CO_2$, $H_2$, plus sulfur and other contaminants in feed which may be outputted in slag which can be periodically drained off. In refineries, sulfur is preferably outputted as gas in the hydrogen stream and is then treated conventionally by the Claus process and the SCOT (Shell Claus Offgas Treatment) unit.

**Controls:**

Conventional analog or digital controls are used, measuring temperature, preferably with optical or infrared pyrometer or protected thermocouple; carbon by spectrometer; level by nuclear radiation and admitting feed, $CH_3$, $CO_2$, $H_2O$ to maintain temperature, which must, of course, be high enough (e.g., at least 1,250° C in feed zone, 1,300°C in oxidizing zone) to maintain the particular metal carbon composition liquid and dissolved carbon level and $H_2$ production within preset limits. Temperature is preferably 1,150°C to 1,600°C, more preferably 1,250°C to 1,500°C, and most preferably 1,300°C to 1,450°C in the feed zone, and usually preferably 50°C to 150°C higher in the oxidation zone.

**Batch/Continuous Operation:**

While the Examples describe the invention on a continuous basis, it may, of course, be practiced on a batch or semi-batch basis with discontinuous flows of starting materials into the molten-metal vessel and with intermittent withdrawal of slag and/or product gases.

**Flexibility:**

Wide ranges of feed rate, feed composition, and contaminants can be accommodated, even wide swings over short time intervals.

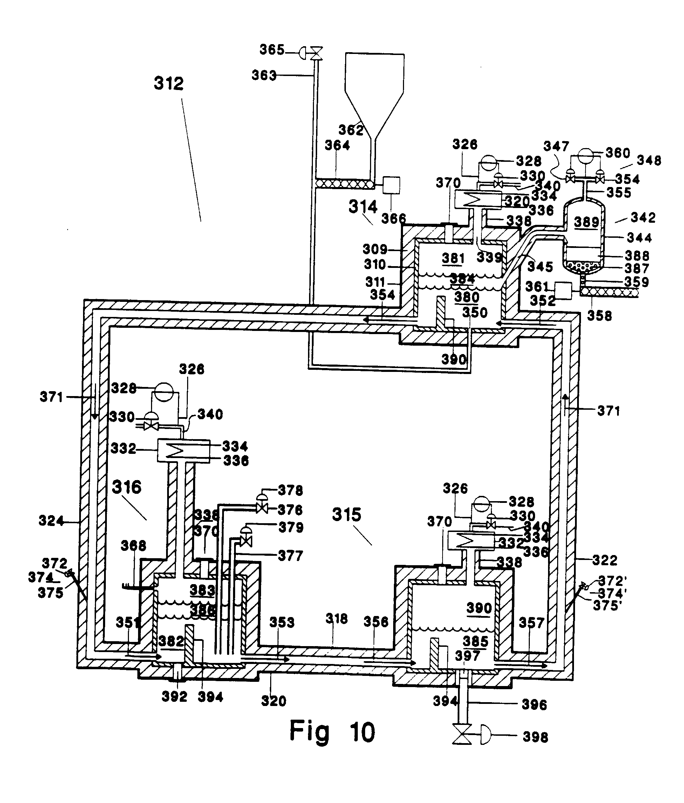

Still another utility of this invention is the ability to add ethane and/or methane to the high-pressure zone to produce substantially pure hydrogen. Preferably, low-hydrogen content hydrocarbons can be introduced into the Fig. 10 low-pressure zone, or zone I or zone 2, for the purpose of providing the heat balance necessary in order to maintain the hydrogen plant. Examples of low-hydrogen content hydrocarbons are the solvent deasphalted pitch mentioned above, residuals from the vacuum distillation tower and coal. In summary, with the three-zone system of Fig. 10, it is possible to introduce high-hydrogen content hydrocarbons to the high-pressure zone such as, i.e., methane or ethane, and low-hydrogen content hydrocarbons at lower pressures such as substantially atmospheric, and by balancing the amount of each of these streams, provide an additional approach and method for heat balance.

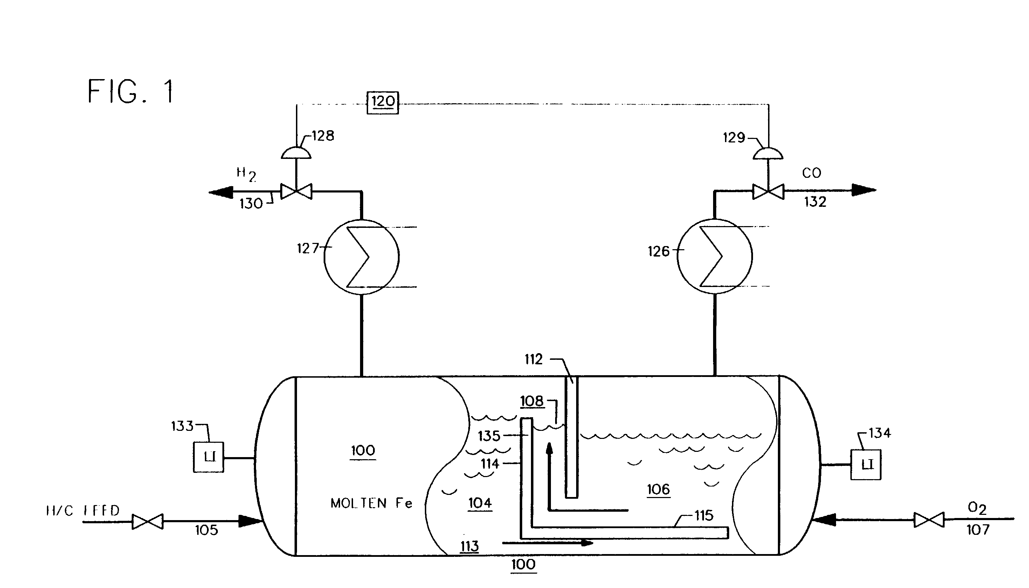

Description of Preferred Embodiments of Figures 1-3

**Preferred Baffle**

Referring to Figure 1, a vessel having a feed zone and an oxidizing zone and containing molten baths for the decomposition of carbon- (and preferably hydrogen-) containing materials is improved by providing upwardly extending submerged baffle means **114** abutting the feed zone and defining one wall of a recycle zone (chimney) **108** communicating between liquid in the oxidizing zone and in the feed zone. The vessel also comprises horizontal extending baffle means **115**, a horizontally extending submerged baffle means integral with a lower portion of the downwardly extending baffle means **114** and arranged so as to define the lower end of recycle zone **108**, much as a hearth is arranged beneath a chimney. The vessel further comprises vapor zone separator means **112**, a vapor zone separator means which separates the vapor space above the liquid baths so that the vapor space of the feed zone is separated from the vapor space of the oxidizing zone. This vapor zone separator means **112** abuts the oxidizing zone and extends downward into the liquid of the oxidizing zone to define the other wall of said chimney zone, but not sufficiently far so as to contact the horizontal extending baffle means **115**.

**Apparatus of Figures 1-3:**

The closed vessel **100** will preferably be lined with brick or castable refractories and may be pre-stressed to maintain the refractories in compression even when the vessel is pressurized and hot.

Downwardly extending baffle means **114** and horizontal extending baffle means **115** can be made of refractory materials or even of tungsten, tantalum, or other high-melting refractory metal which may be coated with refractory ceramics.

Vapor zone separator means **112** will preferably be of the same material as downwardly extending baffle means **114**, and will preferably be hermetically attached to the top wall of closed vessel **100**.

Oxidizer feed means **107** can be any suitable, tuyere design, well-known in the steel-making industry. Feed inlet **105** can operate by gravity or pump (high pressure pump if the vessel operates under pressure).

**Process of Figures 1-3:**

Referring to Figure 1, the main vessel (a refractory-lined steel vessel **100**) encloses feed zone **104**, oxidizing zone **106**, lower circulation zone **113**, and recycle zone **108**. Feed zone **104** receives feed through feed inlet **105**. Oxygen enters through oxidizer feed means **107** into oxidizing zone **106**. Oxidizing zone **106** and recycle zone **108** are controlled by pressure control means **120** which acts on control valve **128** and control valve **129** to throttle H2 outlet **130** and CO outlet **132** differentially as desired. Cooler **127** and cooler **126** protect control valve **128** and control valve **129** by cooling the products. Level controller **133** and level controller **134** control the level in the feed and in the oxidizing zone, respectively, and feed signals to pressure control means **120** to maintain those levels.

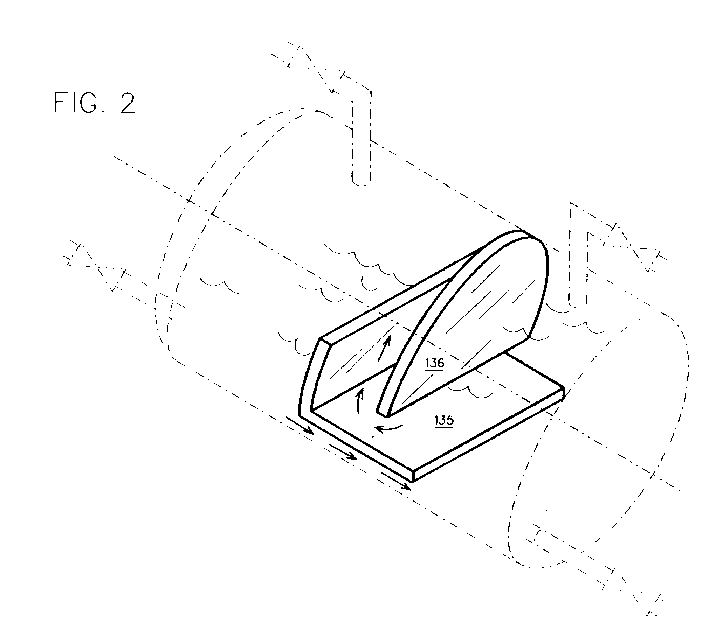

Baffle **135** and baffle **136** are shown in more detail in Figure 2. Note that baffle **135** has both a horizontal and a vertical projection, whereas baffle **136** is primarily vertical in its projection and is sealed hermetically to the edges of refractory-lined steel vessel **100** to effectively separate the gas spaces above the feed zone and the oxidizing zone. Together, baffle **135** and baffle **136** define lower circulation zone **113**, recycle zone **108**, and additionally separate the two gas phases as mentioned above. The recycle zone **108** is particularly formed by a hearth-like substantially horizontal projection of baffle **135** and the vertical projection of baffle **135** acts with baffle **136** to form a chimney-like vertical section to the recycle zone **108**. This configuration is an important feature of the invention because it provides the necessary circulation which moves the carbon first through lower circulation zone **113** from the feed zone to the oxidizing zone **106** after feed zone **104**, thence through recycle zone **108** after the carbon has been largely removed in the oxidizing zone closed vessel **100**.

In operation, the apparatus of Figure 1 has a temperature of approximately 1300°C in feed zone **104**, 1400°C in oxidizing zone **106**, and emits hydrogen and CO at approximately those temperatures, respectively. Pressure within closed vessel **100** is preferably from 0 to 50 bars, more preferably from 0.1 to 40 bars, and most preferably from 1 to 25 bars above atmospheric, though higher pressures, even as high as 100 bars can be utilized with special construction if desired for special circumstances.

Feed zone **104**, preferably contains about 0 to 4.3%, more preferably about 1 to 4%, and most preferably 3% carbon. The carbon content in oxidizing zone **106** is an amount less than in feed zone **104** determined by the circulation rate of the molten metal and the feed rate of carbon to the feed zone. The vessel is a conventional refractory-lined design of steel suitable for the temperature and other surface conditions. The oxygen source is preferably 99.9% oxygen distilled from an oxygen plant operating on air (not shown) but may be air where the additional nitrogen is tolerable. Various feeds are described under the following examples.

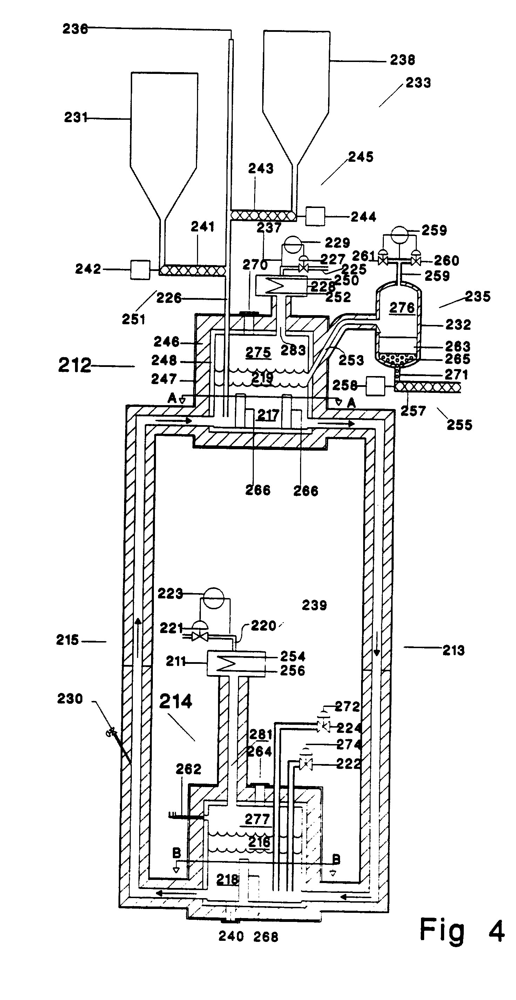

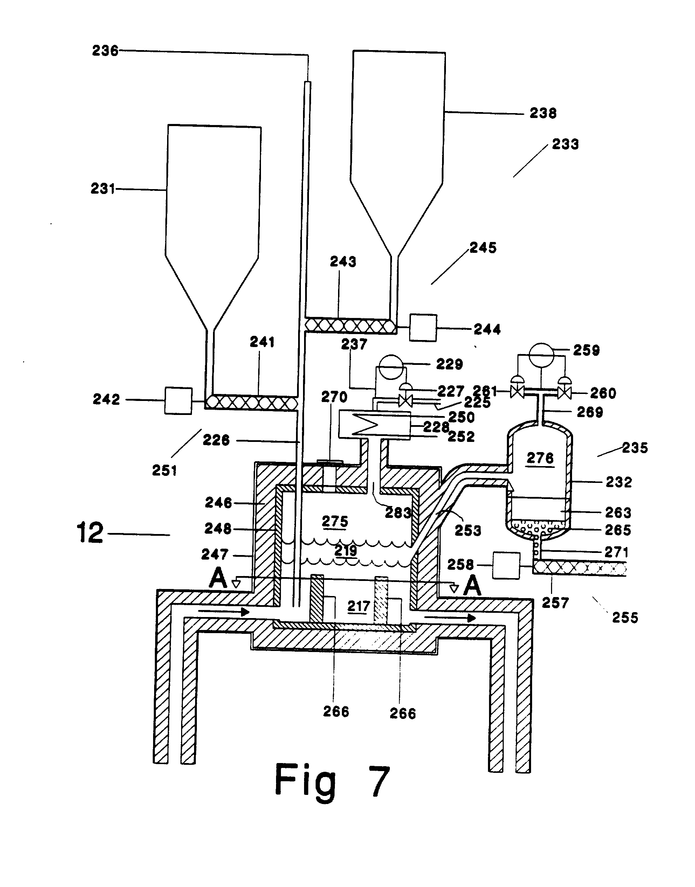

Description of Preferred Embodiments of Figures 4-9

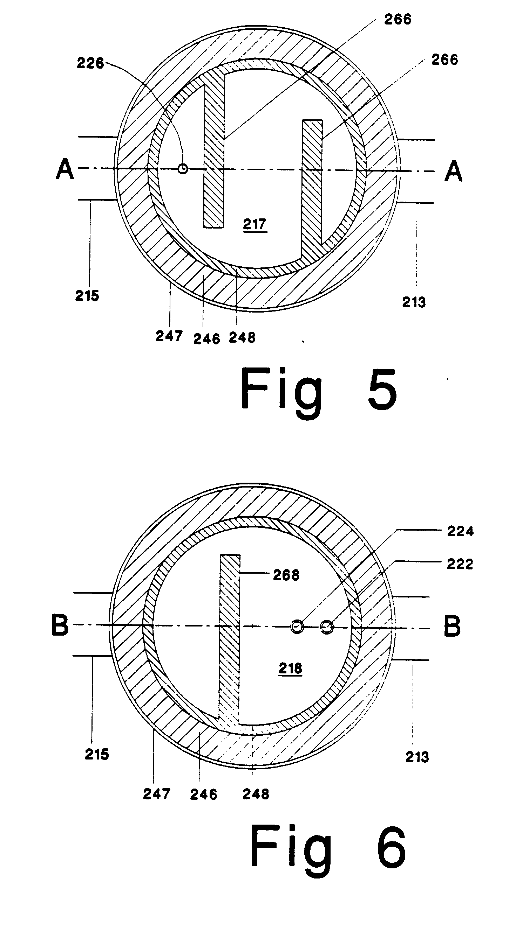

Disclosed in Figure 4 are a first or upper molten metal bath vessel **212**, a second or lower molten metal bath vessel **214**, a conduit **213** for transferring molten metal in layer **217** from vessel **212** to vessel **214,** a conduit **215** for transferring molten metal in layer **218** from vessel **214** to vessel **212**, a means **233** partially shown schematically for introducing carbonaceous feeds, slag components, and gaseous components, a means **235** for removing slay components in layer **219**, a means **237** for controlling the pressure in vessel **212**, a means **239** for controlling the pressure in vessel **214** above molten metal layer **218**, conduit assembly **222** for introducing a molecular oxygen containing stream, and a conduit assembly **224** for introducing water which may have a variety of forms such as a liquid or a gas, but preferably in the form of steam. The walls of vessels **212** and **214** are disclosed clearly in enlarged Figures 5 and 6 to have at least three layers: an outer steel layer or shell **247**; an intermediate refractory layer **246** that provides insulating properties; and an inner layer **248** that provides both corrosion resistance and mechanical strength to resist damage as a result of turbulence from molten metal. Vessel **212** has a removable but pressure tight sealable flange plug **270** which provides an opening through which molten metal is introduced on start-up. Vessel **214** has two removable flange plugs **240** and **264**. Flange plug **264** provides a means for introducing molten metal during start-up and removable flange plug **240** provides a means for removing molten metal on shut-down. Means **233** for introducing carbonaceous feeds, slag components and gaseous components comprises flux hopper **238**, carbonaceous feed hopper **231**, one or more conduits **236** through which motive gas under pressure is introduced from a source not shown, screw feed assembly **245** for powders, which in turn comprises a motor **244**, and a screw feed **243**, screw and feed assembly **51**, which in turn comprises a motor **242** and screw feed **241**. Means **237** for controlling pressure in vessel **212** above slag layer **219** comprises heat exchanger **228** with schematic inlet conduit **250** and outlet conduit **252**, and exit conduit **225** having a pressure control valve **227** operably connected to a pressure controller **229**. Means **235** for removing at least a portion of the slag layer **219** of vessel **212** comprises quench pot **232** shown to contain a quench liquid **263** with solidified particulates **265**, means for introducing and removing gaseous components through conduit **269**, and a means for removing particulates **265** through conduit **271**. Means **239** for controlling pressure in vessel **214** above molten metal bath **218** comprises heat exchanger **211** with inlet conduit **254** and outlet conduit **256**, and a pressure regulated conduit **220** in which there is a control valve **221** operably connected to a pressure controller **223**.

Broadly, operation of this invention involves three phases: start-up, steady state operation, and shut-down.

## Start-Up

A preferred method of start-up of the above described system proceeds as follows:

A burner **262** for supplying heat that is preferably permanently mounted in the top of the second zone is ignited. Burner **262** burns preferably either fuel gas or fuel oil with either air, oxygen enriched air, or even pure oxygen to produce heat. The rate of firing of the burner is adjusted to yield a particular rate of temperature increase in the refractory. Refractory manufacturers recommend a certain rate of heat up for a particular refractory material. The recommendation takes into account the fact that if a refractory material is heated up too quickly it is subject to thermal failure, such as spalling. If the refractory has not previously been exposed to high temperature, the heating rate may be different from that for refractory which has been previously exposed to high temperatures. The combustion products from the burner will circulate from the second zone of vessel **214** to the first zone of vessel **212** by conduits **213** and **215**. The combustion products preferably exit the first zone through conduit **225** with pressure regulator **229** appropriately set at atmospheric pressure. The firing continues until the refractory reaches a temperature in the range of 1200 to 1800°C, and preferably in the range of 1400 to 1500° C. Such heating usually requires at least 20 hours depending upon rate at which refractory can be safely heated so as to avoid damage.

Molten iron with a carbon content of at least 2 wt%, and more preferably 4 wt% is introduced into the second zone through a charging port in the top of the second zone at location shown for plug **264**. Molten iron with a carbon content in this range is readily available from blast furnaces of steel mills. Such molten iron is often referred to as pig iron. It is frequently transported in special rail cars called "hot metal" cars. Once a sufficient quantity of pig iron is charged to the second zone, the charging port is closed and sealed by fill port plug **264**, which is preferably bolted in place and sufficiently sealed to maintain whatever pressures are required and to withstand corrosive effects of vapors at high temperature. The temperature of the molten iron in the second zone can be increased from time to time by injecting oxygen through conduit assembly 222 which is pressure regulated by means of valve **274**.

The pressure in the second zone is increased by closing the valve **221** in conduit **220** and injecting inert gas and/or oxygen through conduit assembly **222**. As the pressure increases in the second zone **277**, the level of molten iron in conduits **213** and **215** will rise. It is preferred to have sufficient volume in vessel **214** so that enough pig iron can be charged to the second zone to fill conduits **213** and **215** completely and to yield a level of molten iron in the first zone of about 0.1m (0.5 feet).

After a level of about 0.1m (0.5 feet) of molten iron is established in vessel **212**, additional molten iron is added to the first zone through a charging port near the top of the first zone **275**. The molten iron temperature in the first and second zones may be adjusted by adding oxygen or steam to the second zone through conduit assemblies **222** or **224**, respectively, or oxygen containing gas through conduit **226** into first zone of vessel **212**. Fill plug **270** is then bolted and sealed in placed sufficiently to maintain whatever pressures are required and to withstand corrosive effects of vapors at high temperature.

To initiate circulation of molten iron from vessel **214** or vessel **212,** a small flow of any one or more of the following can be used: a substantially inert gas; synthesis gas; molecular oxygen; air; or steam through conduit assembly **230** can be added to conduit **215**. The flow of carbonaceous feed and flux is preferably initiated shortly after iron circulation begins to maintain a steady state condition.

## Shut Down

The system is shut down as follows:

The flow of carbonaceous feed and flux to the first zone is halted. The level in the first zone is adjusted by the pressure control valve **221** in conduit **220** of the second vessel **214** so that most of the slag can be tapped from vessel **212**. Then the pressure of the second zone is adjusted so that the level of molten iron in the upper vessel **212** is at its minimum value. Molten iron in the first zone is then tapped. The location of the tap being such that after tapping, the remaining molten iron in the first zone and in conduits **213** and **215** can be stored in the volume of second zone **277**.

The pressure in zone **277** is reduced so as to allow all of the remaining molten iron to flow into vessel **214**. Once the pressure is reduced to atmospheric pressure, a tap having flanged plug **240** in the bottom of vessel **214** is opened and substantially all of the molten iron as a liquid is drained.

If desired, the burner in the top of the second vessel **214** can be used to keep the refractory hot until the next operating period, or the system may be allowed to cool at a predetermined rate adjusted with some heating by burner **262**. Alteratively, cooling may be accelerated by adding steam, air or an inert gas to the second zone **277** and or the first zone **275**. The cooling rate may be retarded by firing the burner in the top of the second zone **277**.

**Steady-State Operation**

With reference to Figure 4, the following is a brief discussion of steady-state operation of a preferred embodiment of this invention.

Perhaps the most straightforward way to understand the steady-state operation of the molten metal gasifier of this invention is to consider the relationship of the various energy and material inputs and outputs of the system.

At steady-state operations, with respect to energy balance considerations, the rate at which carbon is dissolved of dispersed in vessel **212**, the first zone, results in a net energy consumption due to the endothermic process of dissolving carbon, for example, in iron. This is preferably counterbalanced almost exclusively by the net heat generated in vessel **214**, the second zone. Vessel **214** permits two types of reactions: one endothermic, e.g. reaction of carbon and water to produce hydrogen and carbon dioxide; and the other, exothermic, e.g. reaction of carbon and molecular oxygen or some other equivalent chemical source to yield preferably one carbon monoxide, but, if desired, some carbon dioxide. The net energy produced clearly depends upon the difference in heat produced by exothermic processes versus heat consumed by endothermic processes occurring; hence, for example, the ratio of the amount of water versus molecular oxygen, respectively, used.

With respect to vessel **212**, the various inputs comprise: a carbonaceous feed; slag layer components; molten bath components; and a motive gas which can consist of both inert and oxidative components. The outputs from vessel **212** result from pressure regulation and removal of any excess slag layer or excess molten metal and maintaining a substantially constant volume of molten metal. With respect to vessel **214**, the inputs comprise: water; an oxidative gas; and recycled molten metal. The outputs from vessel **214** result from pressure regulation and maintaining a substantially constant volume of molten metal within vessel **214.**

The following discussion will consider individually each material input or output with respect to vessels **212** and **214**.

With respect to vessel **212**, means **233** for introducing carbonaceous feeds, slag components, and gaseous components operates in the following way. A solid carbonaceous feed which can comprise chopped up material such as, for example, tires, plastics, or any other carbon containing feed, are stored in carbonaceous feed hopper **231**. The material preferably is cut into segments roughly one-quarter inch or less. The precise size of the carbonaceous feed is not critical. The feed size is primarily determined by ease of transport through conduits and screw feed assemblies. Carbonaceous feed from feed hopper **231** is transferred into screw feed **241** and transported from screw feed **241** to conduit **226** by means of a screw feed **241** and motor **242**. This is a preferred means for introducing carbonaceous feed into conduit **226.** It is to be understood that there are other alternative means for introducing carbonaceous feed into vessel **212**. An alternative would be to have the conduit **226** enter below the surface of molten metal **217** through a wall. The rate of addition of carbonaceous feed is controlled by the rate motor **242** turns a screw of screw feed **241**. A motive gas introduced through conduit **226** indicated by line **236** provides a means for moving carbonaceous feed components through conduit **226** into molten metal bath **217**.

To introduce slag layer component corresponding to molten slag layer **219**, crushed limestone of roughly 1/8 inch or less are fed from flux hopper **238** into screw feed assembly **245**. The particulate size of crushed limestone and other slag components is not in itself critical, except to the extent of providing easy transport through conduits and by means of screw feed **243** and conduit **226**. In the drawing, it is illustrated schematically that both the carbonaceous feed and the limestone are introduced together through the same conduit **226**. This is a preferred arrangement, but it is not critical to the operation of this invention. It is ideal to have the slag components and the carbonaceous components closely mixed in the molten metal bath layer **217** to increase the likelihood that sulfur, halogens, and other undesirable components will be in intimate contact with slag components to ensure their removal and capture in the slag layer **219**. The rate at which slag components are introduced will be controlled by the rate at which they are transferred from flux hopper **238** to screw feed **243**, and further controlled by the rate at which the screw of screw feed 243 is turned under the motive force of motor **244**.

Since slag layer **219** will eventually become saturated with sulfur components and other undesirable species, the slag layer from time to time or continuously is removed and replaced. The process of removing portions of slag layer **219** is as follows. Pressure within quench pot **232** is regulated by a schematically disclosed split range pressure valve controller **259** arranged to control the inlet pressure as well as the exit pressure from the system. Valve **261** is attached to a source not shown for introducing gas under an appropriate pressure. Similarly, controller **259** arranged to control the inlet pressure as well as the exit pressure from the system. Valve **261** is attached to a source not shown for introducing gas under an appropriate pressure. Similarly, controller **259** controls the outlet valve **260** to relieve pressure from quench pot **232**. By adjusting the appropriate inlet and outlet pressures, slag layer **219** can be introduced into quench pot **232**. As molten slag layer **219** moves into quench pot **232** through channel **253**, it will eventually fall into quench liquid **263**, where it solidifies into particulates which form a particulate layer **265** at the bottom of quench pot **232**. Particulates **265** are removed by transport through screw feed assembly **255** to a storage area not shown. The quench liquid level is adjusted from time to time by addition through means not shown. The liquid **263** is preferably water, but other materials which can act as a quench may be used. Examples of such quench liquids are oils, molten salts or metals.

Some of the molten metal layer **217** can be separately removed by first adjusting the level of molten layer **217** to completely cover the opening to pathway **253** which leads to quench pot **232**. By adjusting the relative pressures within zone **275** relative to the pressure of zone or region **276** of quench pot **232**, molten metal of layer **217** can be transported into quench pot **232.**

To regulate pressure of zone **275**, the pressure controller **229** controls valve **227** in conduit **225**. Since the temperature of gas in zone **275** is so hot, it is necessary to pass hot gases from zone **275** through heat exchanger **228** prior to contacting conduit **225** and valve **227**. Heat exchanger **228** has an input **250** for heat exchange material at a temperature in the range of 1000-1300°C, and an output **252** for heat exchange material in the range of about 300°C to 600°C.

Though only one conduit **226** is shown, it is within the intended scope of this invention to have more than one conduit input into the molten layer **217**. It is preferred that in all instances, the material introduced into molten layer **217** be introduced below the surface of molten layer **217** to avoid difficulty with slag layer **219** and to ensure the greatest amount of mixing of material into molten layer **217**. To further ensure proper mixing, weirs **266** are present in vessel **212** to cause a circuitous path of circulating molten metal. To see the circuitous path established by weirs **266**, reference is made to enlarged Figure 5. The numbers in Figure 5 are the same for corresponding features shown in Figure 4.

Examples of suitable material for weirs or barriers **266** are: the same or similar ceramic materials as the wall lining.

Examples of suitable heat exchangers corresponding to heat exchangers **228** and **211** are: a tube and shell heat exchanger where the hot gas flows through tubes made of stainless steel, inconel or incalloy being cooled by generating steam on the shell side.

Vessel **212** has walls consisting of preferably three layers. An exterior layer **247** made of structural steel generally in the range of 1-2 inches thick, depending upon the overall pressure that is to be the normal operating pressure of the system. An intermediate layer **246** providing insulation properties to limit the transmission of heat from the interior of vessel **212**. Interior layer **248** is an inner refractory material having sufficient corrosion resistance to both slag and molten metal bath components. It is expected that there will be some turbulence as a result of mixing and the introduction of motive gas and feed components through conduit **226** such that some protection for the inner surfaces of vessel **212** different from the insulative properties available to the system by reason of layer **246** will be required.

The operation of vessel **214** is as follows. Air or oxidizing gas is introduced through valve assembly **222** from a source not shown. The oxidizing gas from valve assembly **222** reacts with carbonaceous components within molten layer **218,** thereby heating up layer **218**. To provide a balance and temperature regulation of molten layer **218**, water may be introduced through valve assembly **224** from a source not shown. The water can cause cooling in two ways: one, by endothermic reaction with carbon to form CO and hydrogen; and the other by changing temperature from that on addition to that at steady state conditions. It is possible that a portion of the output coolant from heat exchanger **211** that exits through conduit **256** may so introduced into valve assembly **224.** Excess gaseous components from zone **277** are transported to heat exchanger **211** through pathway **281** for indirect heat exchange with coolant introduced through input conduit **254**. Examples of coolant in conduit **254** are boiler feeds, saturated steam and the like. Because of the extremely high temperatures in zone **277**, it is expected that superheated steam will often be the coolant exiting conduit **256**. The gas from zone **277** having been cooled by heat exchanger **211** is then regulated by valve **221** and valve controller **223**. Controller **223** regulates the pressure within conduit **220**. The gas in conduit **220** consists primarily of a synthesis gas of carbon monoxide and hydrogen. This synthesis gas is taken to a processing zone (not shown) wherein the components are utilized either as chemical feedstock or as a pollutant free medium BTU fuel gas.

By controller **223**, adjusting the pressure within conduit **220**, the pressure in zone **277** can be maintained or changed as desired. By reducing the pressure of zone **277**, a net flow of additional molten metal will accumulate in vessel **214**. Similarly, by increasing the pressure of zone **277**, the layer of molten layer **218** can be moved downward. As the amount of molten metal in vessel **214** decreases, there is a corresponding increase in the volume of molten metal in vessel **212**. Consequently by controlling the relative pressures in zones **275** and **277**, the relative levels of molten metal in vessels **212** and **214** can be regulated.

Of particular importance in the operation of the system of this invention is the necessity to maintain a flow of molten metal from vessel **212** to vessel **214** and back to vessel **212**. Molten metal exits vessel **212** through conduit **213** in the direction shown by the arrows within conduit **213**. Similarly, molten metal is transported from vessel **214** back to vessel **212** through conduit **215** in the direction shown by the arrows within conduit **215**. To ensure this path of circulation, a motive or lift gas is introduced periodically through input assembly **230** consisting of a valve and conduit. The source for motive or lift gas through input assembly **230** is not shown. The gas may consist of oxygen to increase the temperature of the rising molten metal in conduit **215** or merely an inert gas such as nitrogen to change the overall density of the material in conduit **215** to increase its tendency to rise in conduit **215**.

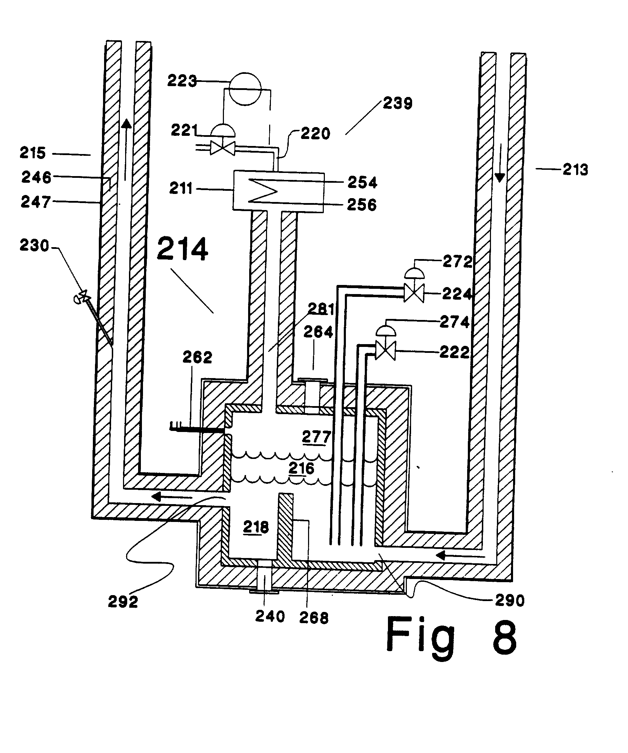

Figure 8 shows an enlarged view of vessel **214** and a portion of conduits **213** and **215**. It contains a modification to vessel **214**, but maintains the same numbers for corresponding or equivalent features in each. In Figure 8, a slag layer **216** that is not present in Figure 4 is shown. To permit removal of slag layer **216** so that there is not an undesirable buildup of that layer in vessel **214**, outlet **292** is at a different level relative to inlet **290**, thereby permitting by appropriate pressure control to permit removal of all or a portion of layer **216**. This is done because although one may not directly add slag components to the second zone, it is possible that these components become entrained within the material transferred from the first zone to the second. In any event, having a slag layer **216** in the second vessel permits a further purification, in the event such is necessary depending upon the carbon feeds, to remove additional undesirable components such as sulfur or halogens and the like from synthesis gas produced in said second zone or vessel **214**.

The operation of the embodiment shown in Figure 8 expect for the modification discussed in the immediately preceding paragraph, is substantially the same as that discussed with respect to Figure 4.

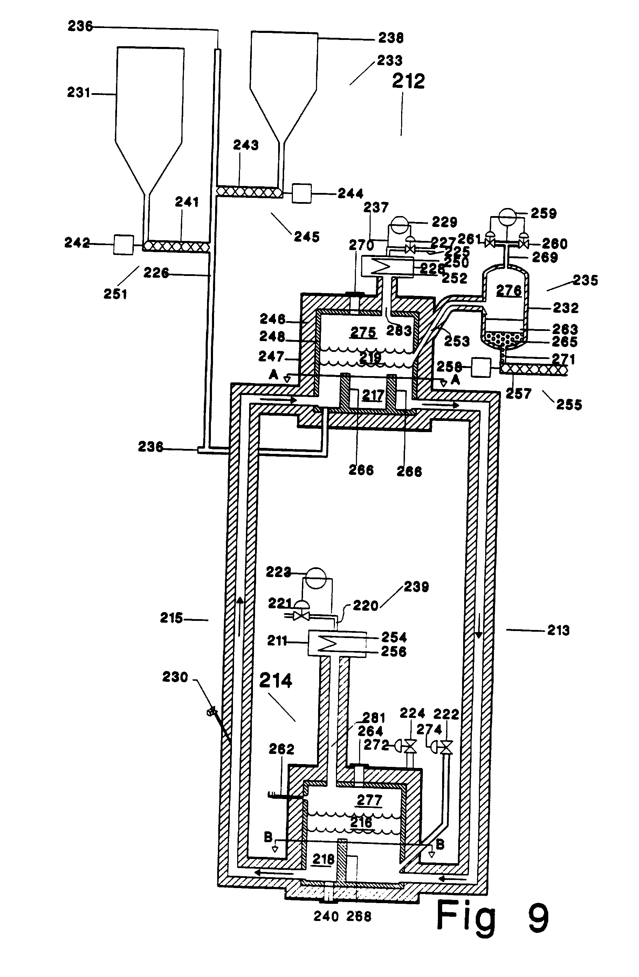

Figure 9 shows a modification to the plant of Figure 4, wherein it is possible to introduce carbon feeds into vessel **212** through a wall below the surface of layer **217**. To do this, it is shown that there are two motive gas sources **236** to ensure free movement of any material being transferred through conduit **226**. Also it is to be noted that in Figure 9, a slag layer **216** is shown in the vessel **214**. Although inlet **290** is at the same level as **292**, it is still possible to remove slag components in the same manner as that disclosed with respect to vessel **212**. The vessel **232** and other means are however not shown in Figure 9.

The following table gives the reactions occurring in the various molten metal layers:

Reactions Occurring in the Slag Layer of the First Zone and Optionally the Second Zone:

$$CaO + FeS + C \rightarrow CaS + Fe + CO\uparrow$$

$$CaO + FeCl_2 + C \rightarrow CaCl_2 + Fe + CO\uparrow$$

Reactions Occurring in the Molten Metal of First Zone:

$$C + 3Fe \rightarrow Fe_3C$$

$$C_nH_m + 3nFe \rightarrow nFe_3C + m/2H_2\uparrow$$

$$C_kH_mN_n + 3kFe \rightarrow kFe_3C + m/2H_2\uparrow + n/2N_2\uparrow$$

$$C_kH_mO_n + 3 (k-n) Fe \rightarrow (k-n)Fe_3C + M/2H_2\uparrow + nCO\uparrow$$

$$C_kH_mS_n + (3k+n) Fe \rightarrow kFe_3C + m/2H_2\uparrow + nFeS \text{ or } nH_2S\uparrow$$

$$C_kH_mCl_n + (3k+n/2) Fe \rightarrow kFe_3C + m/2H_2\uparrow + n/2FeCl_2$$

Reactions Occurring in the Molten Metal of Second Zone:

$$2Fe_3C + O_2 \rightarrow 6Fe + 2CO\uparrow$$

$$Fe_3C + H_2O \rightarrow 3Fe + H_2\uparrow + CO\uparrow$$

In Figure 4, there are: a two zone gasifier **210**, a first vessel or zone **212**, a second vessel or zone **214,** a down flow conduit **213,** an upflow conduit **215**; a plurality of conduits: a steam and solid conduit **226**, an off gas conduit **225**, a steam or liquid conduit assembly **224** for the second zone **214**, oxygen containing stream inlet conduit assembly **222** and a syngas outlet conduit **220**, and, optionally, a secondary gas inlet conduit assembly **230**, molten metal or slag tap pathway **253** and quench pot **232**.

With reference to Figure 4, in first zone **212**, there are two immiscible liquid layers. The lower level consists of a molten metal layer **217**. Preferably, the molten layer will consist of iron because of its very high solubility for carbon, low volatility or vapor pressure at optimal operating temperatures, and a viscosity in the range of about 2 to 20 centipoise ("cps") at operating temperatures in the range of 1147°C to 1800° C. However, other materials which have suitably high solubility of carbon, e.g. in excess of 1/2 wt%, could be used. An ideal material would be molten at a much lower temperature with a very high level of solubility for carbonaceous material, but also with a suitably low viscosity and low volatility or vapor pressure at operating conditions. For example, a viscosity in the range of about 2 to 100 cps and a vapor pressure less than about 1 torr (one millimeter of mercury) and preferably less than about 0.1 torr for molten material at a temperature in the range of about 1000 to 1800°C. The second level **219**, less dense than molten metal layer **217**, is a slag layer **219**. In zone **212**, the temperature of the molten metal layer in the case of iron is 1300° C, but can be anywhere in a temperature range of 1147°C to 1800°C. The pressure in first zone **212** can be anywhere from about 1-2 bar (about 0 psig to 15 psig), and preferably is from 1.3-1.7 bar (about 5 psig to 10 psig). The temperatures and pressures are preferably dictated by thermodynamic considerations to optimize any reactions occurring and to optimize the propensity of any undesirable materials such as sulfur or halides to be captured by slag layer **219**.

As is clear from Figure 4, from time to time or on a continuous basis, it is desirable to remove slag or iron through passageway **253**. This will be true because slag from time to time or continuously will be added in the form of slag precursor materials, such as calcium oxide and perhaps silicates. Iron is often present in carbon source materials such as coal; consequently, some iron from time to time will also have to be removed to maintain proper molten phase levels.

Transport gas and solids such as carbon-containing materials are introduced through conduit **226** which optionally may also involve additional conduits. Off gases that are produced in first zone **212** or introduced into the first zone as a result of reactions occurring in the second zone **214**, or as a result of introducing gas through conduit assembly **230** and are vented through off gas conduit **225** after transport through pathway **283** and heat exchanger **228** wherein there is an indirect heat exchange to reduce its temperature.

The second zone **214** contains a molten layer **218** and as shown in Figure 5 may optionally contain a slag layer **219**, the temperature of the second zone is 1147°C to 1800°C, the pressure is preferably about 2.7-205 bar (25 psig to 3000 psig). These temperatures are dictated by heat requirements in the first zone and heat losses elsewhere throughout the system. Higher pressures and temperatures are possible and only limited by the practical cost of operation and materials available.

Downflow conduit **213** interconnects first zone **212** with second zone **214**. Upflow conduit **215** also interconnects first zone **212** to second zone **214**. Due to the temperature difference between the first zone and the second zone, convective transfer of molten metal will occur from the first zone to the second zone and back. Initially, molten iron or other molten material in zone **212** will be transferred through down flow conduit **213** to the second zone **214**. Since an oxygen containing stream is introduced into the second zone, the temperature of the second zone will be hotter than that of the first zone, and therefore, there will be a tendency for the heated molten metal of layer **218** to be transferred through conduit **215** back to the first zone. Optionally, as a method for increasing the rate of circulation and to improve the flow rate and sometimes even to initiate the direction of flow, gas either inert or oxidizing can be introduced through conduit assembly **230**. With the introduction of gas through conduit assembly **230**, the tendency for the molten metal to move up through conduit **215** and down through conduit **213** is increased.

As a method for controlling the amount of temperature in the second zone, optionally, steam or other liquid can be introduced through conduit **224**. Steam introduced through conduit **224** will provide temperature control through an endothermic reaction with any carbonaceous material present, wherein water plus carbon become hydrogen and carbon monoxide. The pressure in force per unit area in the second zone of vessel **214** will depend upon the relative heights of molten material in each of the zones and the difference in heights between each zone, taking into account any variation, uniform or not, in densities of relevant portions of molten material. For example, the densities of layers **216** and **218** in appropriate units times their respective heights are deducted from pressure or force per unit are produced by the molten material in each conduit **213** and **215** plus molten layers **217** and **219**, i.e. respective heights times their respective densities in appropriate units. The pressure of gas in second vessel **214** will be determined by the amount of back pressure maintained within synthesis gas conduit **220** by the control valve **221**. The pressure in the first zone will be determined by the off gas pressure determined by the valve **227** on off gas conduit **225**. To some degree, the amount of back pressure from slag taps and iron taps also play a part. However, it is preferred that the primary control of the relative molten liquid layers and their heights within the first and second zones shall be determined by the back pressure determined by any gases above these liquids.

Reactions occurring in the first zone of vessel **212** are: the reactions occurring in the molten slay layer **216**; and the reactions in molten metal layer **217**. The reactions occurring in the second zone of vessel **214** are: the reactions in the molten metal layer **218** and optionally, in the presence of a slag layer such as shown in Figure 8.

The off gas with a total pressure in the range of 0 to 15 psig through conduit **225** will have a composition expressed as volume percent in the range of about 20 to 80% $H_2$, 15 to 70% CO, 0.5 to 5% $N_2$ and minor amounts of various other gases, all of the foregoing depending on the carbonaceous feed source and any mobilizing or fluidizing gas added to zone one, directly or indirectly.

The synthesis gas exiting through the synthesis gas conduit **220** will have a composition expressed as volume percent in the range of 10 to 40% $H_2$, 55 to 85% CO, 0.5 to 5% $N_2$, 2 to 10% Ar and minor amounts of various other gases depending on the source of oxygen with a pressure in the range of 2.7-205 bar (25 to 3000 psi).

The circulation rate from first zone to second zone will be in the range of 25 to 1000 lb (Kg.) iron per net lb (Kg.) of carbon dissolved in the first zone. Consequently, the greater rate of carbon introduced into the first zone, the greater will be the circulation rate at steady-state conditions all other factors being held constant.

The slag composition by weight of slag layer **219** in the first zone has ranges from 13 to 55% CaO, 20 to 45% $SiO_2$, 12 to 24% $Al_2O_3$, 1 to 25% CaS, 0 to 5% MgO, 0 to 5% $TiO_2$, 0 to 2% $K_2O$ and 0 to 2% $Na_2O$. The presence and quantity of constituents in the slag layer is dependent on the type and quantity of carbonaceous material fed to the first zone and the rate and composition of flux addition to the first zone. It is possible that species other than those mentioned above would be found in the slag layer, such as halides and heavy metals.

The advantage of having a slag layer **219** in the first zone is that sulfur, chlorine or other halides which are contained in the carbonaceous feed or are contained in other streams feeding into either the first or second zones react with calcium oxide (CaO) and/or magnesium oxide (MgO) in the slag layer to form the corresponding sulfides or halides. These sulfides and halides exit the first zone when slag is tapped from the first zone. Sulfides and halides in this form are non-hazardous and rather easily handled.

An example of this invention is a gasifier having two zones each with the following capacities: the first zone consists of a cylindrical, refractory lined, steel shell vessel having an internal diameter of at least 0.9m (3 feet), but more preferably 3-4.6 m (10-15 feet), although larger diameters are feasible if very large carbonaceous feed rates are required. The depth of molten iron in this vessel is preferably at least 0.6m (2 feet), but more preferably 1-2.5 m (3-8 feet), although greater depths are possible and may be required if the particular carbonaceous feed being introduced is slow to dissolve in the molten metal layer. The depth of liquid slag floating upon the molten metal is preferably at least 2.54 cm(one (1) inch) thick, but more preferably 15-45 cm (6-18 inches), although greater depths are possible.

The particular refractory lining of all areas that are in contact with molten metal or iron, slag and reducing gases at temperatures above 1100° C is of critical importance. In the first zone, the areas exposed to and adjacent to slag and molten iron are the most susceptible to attack. Multiple layers of ceramic materials offer the best performance as is the case in similar environments in the steel making industry. The inner most refractory material in areas in contact with molten slag or molten iron should be a fused-cast alpha alumina such as Monofrax A-2 of the Carborundum Company. High alumina brick such as Korundal SC of Harbison-Walker Refractories also perform well in this service. In areas of less severe services, high alumina castable material such as Harmix CU or Harmix AL also by Harbison-Walker Refractories may be used as the inner surface. Behind the first layer of ceramic described above various insulting firebrick or castable materials may be used. If castable materials are used, they may or may not be reinforced with fibers made of stainless steel or other suitable materials.

The temperature of the molten iron or metal in this zone must be at least above its melting point. The melting point of iron (1535°C at 0% carbon) decreases with increasing carbon content up to 4.2 wt% carbon where the melting point is 1147°C, as the carbon content continues to increase above 4.2 wt% the melting point increases rapidly to in excess of 1600°C at 6.7 wt% carbon. It is anticipated that at normal operating conditions the carbon content of the molten iron in the first zone will be at least 3 wt% and as high as 4.5 wt%, but more preferably around 3.3 to 4.2 wt%. This requires a minimum temperature of between 1147° C and 1800°C. A safety margin of approximately 50°C should be added to the minimum since the temperature throughout the zone will not be completely uniform.

The pressure in the first zone of Figures 4-9 is preferably equal to or a little above atmospheric pressure to eliminate the need for expensive vacuum producing equipment, and more preferably in the range of 5 to 10 psig to allow for pressure drop in downstream processing equipment without requiring negative pressure at some point in the process. The pressure may be greater than 1.7 bar (10 psig) but this can cause introducing solids into the molten iron to be more difficult, but if much lower than 1.3 bar (5 psig) operation also becomes more difficult.

Carbonaceous solids are added through hopper **231**. This hopper may have a long vertical drop pipe to a screw feeder (or similar device). The coal in the vertical drop pipe may be fluidized by any of several gases such as nitrogen or flue gas to produce a pressure head sufficiently to overcome the pressure of the first zone, the pressure of the molten iron and slag above the outlet of conduit **226**, and the pressure drop due to friction in conduit **226**. Alternately, hopper **231** may be pressurized to a pressure sufficient to overcome the above mentioned pressures required to feed the carbonaceous material into the first zone. If hopper **231** is pressurized, two identical hoppers will be required so that one can be in operation while the other is being refilled with carbonaceous solids. Another option would be to use a screw feeder which seals sufficiently to allow it to overcome the pressure required to feed the solids into the first zone. Such self sealing screw feeders have been demonstrated on an experimental scale and may become commercially available soon.

A second hopper, **238**, is used to feed flux material, typically calcium carbonate, into the first zone that is in every other way generally identical to hopper **231**. Both hopper **238** and **231** may discharge into a common conduit, **226**, as shown in Figure 4 or separate conduits may be used. Alternatively, the flux material may be mixed with the carbonaceous feed thereby eliminating one of the hoppers but making independent control of flux to carbonaceous feed ratio more difficult.

By any of the means mentioned above, the carbonaceous feed and flux preferably are pneumatically transported in conduit **226** by a suitable high velocity gas such as a mixture of carbon monoxide and hydrogen produced in the second zone, as described below at sufficient pressure and velocity so as to inject the solids at a depth of at least 1.4 m (2 feet), and preferably about 0.9-1.8 m (3-6 feet) below the average level of molten iron layer **217**. Injection may be at depths of greater than 1.8 m (6 feet), however there is no incentive to do so unless the carbonaceous feed fails to completely dissolve in the molten iron at lesser depths. The end of the lance must be at least 0.3 m (1 foot), and preferably 0.6 m (2 feet) above the ceramic lining of the floor of the second zone (the same is true for the first zone) to prevent excessive impingement and abrasion of the ceramic liner.

Hydrogen contained in the solids fed beneath the molten iron or metal layer react in near stoichiometric quantities to form hydrogen gas which bubbles rapidly to the surface and exits through conduit **225**. Oxygen contained in these solids combines almost exclusively with carbon dissolved in the molten iron to form carbon monoxide. Sulfur contained in the solids reacts initially with iron to form FeS. The FeS later reacts with CaO and carbon to form CaS and CO. Nitrogen contained in these solids may initially react with molten iron to form iron nitrides.

However, once an equilibrium level of iron nitrides is reached, additional nitrogen will react to form gaseous nitrogen which bubbles to the surface and exits through conduit **225**. Halides in the feed solids will eventually react with the slag to form the corresponding calcium halide. Any iron in the feed solids whether free iron or chemically bound will react to form elemental iron and increase the quantity of molten iron in the system.

As the solids are continually fed to the first zone, gas will be continuously produced with a typical composition discussed hereinbefore. This gas exits the first zone at a temperature of at least 1100°C. At this temperature, the gas must be conveyed in a refractory lined conduit **283** since commonly available metals cannot withstand such conditions. The hot gas is heat exchanged in a boiler system similar to that of the convection section of a fired process heater in a petroleum refinery. After reducing the temperature to less than 300°C, conventional alloy steel piping and valves can be employed to convey and control the gas. This gas could be compressed for further processing to yield refinery or chemical grade hydrogen or to produce chemical feedstocks for processes that produce methanol or formaldehyde or polymers found in Fischer-Tropsch reactors.

By adjusting the level of molten iron and slag in the first zone by means of the differential pressure between the first zone and the second zone, it is possible to withdraw slag or molten metal, e.g. iron, separately from the same tap provided only slag or only molten iron enter tap pathway **253** separately. However, if large quantities of either must be withdrawn it is preferable to have a separate tap for each component.

Measurement and indication of slag and molten iron levels in both the first zone and the second zone are critical to the successful operation of this process. A preferred method for measurement of molten iron and molten slag levels is a nuclear level detector. This method has the particular advantage that 11 of the components of the level detector can reside outside of the vessel in which the level is being measured. A particular example of such a level detector is the SHLG manufactured by the Chmart Corporation. This detector uses a Cesium 137 radioactive source with a strength of at least 2000 m Ci. Depending on the size and design of the particular vessel, other types of nuclear level detectors can be used.

Most of the reactions occurring in the first zone are endothermic or require heat. This heat is supplied by molten iron at a temperature 100 to 300°C hotter than the first zone flowing from the second zone to the first zone through conduit **215**. Cooler, carbon rich molten iron flows by gravity from the first zone to the second zone through conduit **213.** The method by which this flow is initiated and maintained is discussed elsewhere in this specification.

The second zone consists of a cylindrical, refractory lined, steel shell vessel, having an internal diameter of at least 0.9 m (3 feet), but more preferably 3-4.5 m (10-15 feet). Larger diameters are feasible if very large feed rates are required. The depth of molten iron in this vessel is at least one 0.3m (1 foot), but more preferably 0.6-2.4 m (2-8 feet). A layer of molten slag may or may not be present. Considerations in selecting the refractory lining for the second zone are similar to those discussed earlier for the first zone.

The gas pressure in the second zone is the sum of the gas pressure in the first zone, the vertical height of molten iron as measured from the molten iron interface in the second zone to the molten iron interface in the first zone multiplied by the density of the molten iron expressed in appropriate units and depth of slag in the second zone (if any) subtracted from the depth of slag in the first zone multiplied by the density of the slag expressed in appropriate units. The pressure in the second zone increases by approximately 3 psig for each vertical foot of increase in the difference between the molten iron layer in the first zone and the molten iron layer in the second zone all other parameters held constant. The pressure, for example, where the vertical separation between the two zones is approximately 30 m (100 feet) is 21 bar (300 psig). The minimum pressure for the second zone is roughly 25 psig since the distance of the first zone above the second zone must be at least 2.4 m (8 feet) to ensure reasonable rates of circulation.

There is no absolute maximum pressure for the second zone. However, as the vertical distance of the molten metal layer **217** including slag layer **219** in the first zone of vessel **214** above the second zone increases beyond 30m (100 feet), design, construction problems, and costs increase rapidly. The economic benefit of having the synthesis gas exiting the second zone of vessel **214** at a pressure above 21 bar (300 psig) increases only slightly.

In the second zone of vessel **214**, carbon dissolved in the molten metal bath **218** is contacted with a source for oxygen (or oxygen produced by any other method which results in steam). To keep the system in carbon balance, the consumption of carbon to form carbon monoxide by oxygen and steam in the second zone must match the amount of carbon which is fed into the first zone minus the amount of carbon leaving the first zone as gas through conduit **225**. The reaction of oxygen with carbon to form carbon monoxide is exothermic. The reaction of steam (H2O) with carbon to form hydrogen and carbon monoxide is endothermic. Temperature control of the iron in the second zone is preferably controlled by adjusting the ratio of steam to molecular oxygen containing the molten iron in the second zone. The conduits for steam and oxygen preferably introduce these below the surface of molten metal in the second zone by about 5-25 cm (2-10 inches), and more preferably about 15 cm (6 inches) although it is possible to operate with the conduits submerged to lesser or greater depths. However, poorer oxygen and steam utilization occur when the conduits are submerged at depths of less than about 5 cm (two (2) inches) and no significant benefit is derived from depths of greater than about 25 cm (10 inches). The conduits which are often referred to as lances must be of special design and construction to withstand the extreme temperature and chemically active environment found in this service. Water, oil, or other cooling media circulating within the lances is usually employed to prevent them from reaching damaging temperatures.

Circulation of molten iron from the hotter second zone to the cooler first zone and back is primarily the result of a difference in density between the molten iron in the upflow conduit **215**, and that density in the molten iron in the downflow conduit **213.** The density of molten iron in this system is primarily a function of two parameters; namely, carbon content and temperature of the molten iron. Within the range of operating conditions for this system, the density of molten iron decreases with increasing carbon content and with increasing temperature. An increasing difference in density between the molten iron in conduit **213** and **215** results in a pressure differential which causes flow. As the flow rate of molten iron in conduits **213** and **215** increases the pressure loss due to flow increases. Thus, a given density difference between the molten iron in conduit **213** and **215** will produce a particular flow rate of molten iron assuming that all other parameters are constant.

Description of the Preferred Embodiments in Figure 10

Disclosed in Figure 10 is a molten metal gasifier plant **312** that comprises at least three molten metal zone means. These at least three molten metal zone means comprise a first molten metal means **314**, a second molten metal zone means **316**, and a third molten metal zone means **315**.

In the first molten metal zone means **314** are a means for introducing a feed beneath the surface corresponding to conduit **363** through a first zone inlet means **350**; a first zone recycle inlet means **352**; a first zone recycle outlet means **354**; a gaseous outlet means **339**; a first zone slag layer outlet pathway **345**; a mixing weir **394**; fill-plug **370**; heat exchanger **332**; pressure regulator means **328**; a means for removing, cooling, and storing molten materials **342**. The walls, floor, and ceiling of first molten metal zone means **314** comprise three layers. The first layer comprises a metal shell **311**. The second layer comprises an insulation layer **309**, and the third layer comprises a fire brick layer **310.**

The second zone or second molten metal zone means **316** comprises: a second zone recycle inlet means **351**; a second zone recycle outlet means **353**; a gaseous outlet means **339**; a mixing weir means **394**; a molten metal fill-plug **370**; walls and ceiling preferably comprising at least three layers; mixing weir **394**; molten metal outlet **392**; gas phase outlet **339**, an outlet **392** for molten metals, preferably a gas flame heater inlet **368**; inlet conduit **377** for gaseous inputs; inlet conduit **378** for steam or other gaseous inputs. In the third zone, molten metal means zone **315**, there are a third zone recycle inlet **356**, a third zone recycle outlet **357**; preferably at least three-layered walls, floor, and ceiling; a gas phase outlet **339**; a molten metal fill-plug inlet **370.**

Connecting the first, second, and third molten metal zone means are: conduits **322, 318,** and **324.** In conduit **322,** there is a gas injection means **374** comprising a conduit **375** and valve **372**. In conduit **324**, there is also a gas injection means **374** that also comprises a separate conduit **375** and valve **372**, which serves an identical function to that gas injection means **372** within conduit **322.**

In conduit **363**, there are a valve **365**, a screw feed **364**, powered by a motor **366**. Hopper **362** stores material that is preferably gravity fed into the throat of feeder **364**.

Briefly, operation of the system referred to as plant **312** is as follows:

Feed, either in gaseous or solid form or both, is introduced into plant **312** through conduit **363**. Gaseous components may be introduced from a source not shown through valve **365.** The solid feeds introduced into conduit **363** by means of feeder **364** can be carried by a fluid, a vapor, or other gaseous sweep into first zone feed inlet **350.** It is preferable that the feed be introduced below the molten layer **380** which comprises a molten metal, for example, iron or iron containing other materials to improve solubility and reactivity. Generally, a plug of vapor will prevent molten metal from entering into conduit **363.** Within first molten metal zone means **314,** there are preferably three different layers of material. The first layer is molten metal **380.** Within molten metal **380** are dissolved feed and some gaseous inputs which are also introduced through conduit **363.** Floating on molten metal layer **380** is a slag layer **384.** Slag being less dense generally than molten metal will float on molten metal layer **380.** Above slag layer **384** is a vapor layer **381.** Within vapor layer **381** are primarily hydrogen, with some carbon monoxide, and a trace of methane.

The precise level of layer **384** is determined by the amount of pressure maintained in vapor layer **381.** The amount of pressure in vapor layer **381** is determined by pressure controller or pressure regulator means **328.** Pressure regulator means **328** provides a set point control for valve **330** in conduit **340.** A pressure sensor **326** monitors the pressure upstream of valve **330** to establish whether valve **330** is opened or closed relative to a source for pressurized vapor not shown. Generally, the valve is either opened or closed to maintain the pressure within the vapor level or vapor layer **381.**

To remove slag layer components from layer **384** through first zone slag outlet pathway **345,** the pressures in vapor layers **381** and **389** are adjusted. The vapor pressure within slag removal vessel **344** is determined by a slag pressure control system **348.** Slag pressure control system **348** comprises a pressure controller **360** which sets a set point for two valves **346** and **347.** Conduit **356** splits into two outlet conduits containing respectively valve **346** and valve **347.** Pressure controller **360** establishes a set point for each of these valves, **346** and **347** respectively, so as to permit pressurizing inlet gases to maintain the pressure of vapor layer **389.** When the pressure exceeds the set point value, then one of the two valve opens to relieve the pressure. In other words, valve **347** permits an influx of pressurized gaseous and valve **346** permits a relief from such pressures so that the overall pressure within vessel **344** as measured in vapor layer **389** is maintained at some desired value. This in turn determines through the relative pressure of vapor **381** and that of vapor **389,** the movement of slag layer components from layer **384** through pathway **345** into vessel **344.** Within slag removal vessel **344** there is a liquid layer **388,** preferably comprising water or some other medium capable of removing substantial amounts of heat. In other words, liquid layer **388** is a quench layer that causes slag layer components in layer **384** to solidify into solid particulates **387.** Particulates **387** are introduced through conduit **359** into feeder conduit **358** powered by motor **361.** Material transferred by feeder **358** are taken to a location not disclosed. Additional liquid can be introduced into vessel **344** by means of a valve not shown. Additional molten metal components can be introduced into vessel **314** through fill-plug **370.**

It is to be noted that during initial start-up of plant **312,** molten metal can be introduced through any of the fill plugs identified by the common number **370.**

The precise location of the various layers in each of the zones is determined by the relative pressures present in each of the zones. Accordingly, changing the pressure of the vapor layer **381** of vessel **314** will change the location of the molten layers in each of the three zones.

Having discussed vessel **314,** let us now discuss vessel **316** which comprises some of the same items as that in vessel **314** and **315,** at least with respect to pressure control. Molten metal from vessel **314** is transferred through conduit **324** in direction shown by arrow **371** to vessel **315** through inlet **351.** Materials entering inlet **351** are ensured stirring from at least two sources. The first source is weir **394** which ensures that there is an indirect flow from inlet **351** to second zone outlet **353.** The second source of stirring is the introduction through conduits **377** and **378** of gaseous components. As explained earlier, inlet conduit **377** for gaseous inputs can introduce oxygen or even hydrocarbon feeds. Inlet conduit for gaseous input **378** can introduce steam or other gaseous components. The gaseous components introduced through these conduits below the molten metal layer **382** in vessel **315** undergo appropriate reactions to be discussed in more detail with respect to an example of this invention. Gaseous components enter the gas phase **383** where they exit through gaseous outlet **339** and insulated chimney outlet **338.** The very hot gaseous components within insulated chimney outlet **338** pass through heat exchanger **332** where they indirectly exchange heat with material entering inlet **334** and leaving outlet **336.** The gaseous components cooled by heat exchanger **332,** then enter conduit **340** where pressure regulator controller **328** maintains pressure within conduit **340** at some desired value. Valve **330** having a set point releases excess gases to maintain pressure within conduit **340** to some desired value. This value is determined by the desired level of material within vessel **315** and also with respect to the desired pressure sought in vapor layer **383.** Molten metal circulating from layer **382** passes through third zone outlet **353** into conduit **318** and then into vessel **316.** Again, molten metal is stirred by mixing weir **394** having the same number as the mixing weir in vessels **314** and **315.**

Molten metal entering third zone recycle inlet **356** mixes in layer **385,** then in part exits through third zone recycle outlet means **357** into conduit **322** in the direction of the arrow **371.**

Optionally, but preferably gaseous materials, such as ethane and methane are introduced through conduit **396** and valve **398** into inlet for gaseous components **397.** Again, as in vessel **315,** the vapor layer **390** of vessel **316** is maintained at a certain pressure by the same pressure controlling system as described with respect to vessels **314** and **315**. The same numbers are used for equivalent functioning elements. The molten metal leaving through second zone recycle outlet means **353** enters conduit **322** and then returns to vessel **314** where it enters molten layer **380** through first zone recycle inlet **352**. Optionally, but preferably, there is a gaseous flow control means **374** comprising a valve **372** and conduit **375**. Each of these is downwardly oriented through wall conduits **322** and **324**, respectively. Depending upon the amount of gas injected through conduit **375** either into conduit **322** or **324**, the movement of molten metal in the direction of arrow **371** can be either increased or decreased. Clearly introduction of gaseous components into conduit **322** through conduit **375** from a source not shown through valve **372** will tend to increase circulation rates in the direction of arrow **371** within conduit **322**. However, introduction of gaseous components into recycled conduit **324** results in a decrease in the circulation rate as indicated by arrow **371** in conduit **324**.

Example 18 discusses in detail the rates appropriate for introducing materials through the various conduits just discussed. And also, in Example 18, there is a discussion why the addition of methane and ethane as the hydrocarbon source for generating hydrogen in first-zone **314** will not work in the absence of another component to the feed having a much higher carbon-to-hydrogen content.

Table A

| tabulates preferred levels of parameters. | | | |
|---|---|---|---|
| **Parameter** | **Preferred** | **More Preferred** | **Most Preferred** |
| Feed C:H Mol Ratio | 0.1 - 4 | 0.5 - 3.5 | 2 - 3 |
| Oxygen Feed O:C Mol Ratio | 1 - 2 | 1 - 1.5 | ≈1 |
| Kg Molten Metal Circl:Kg Feed | 25 - 5,000 | 100 - 2,000 | 200 - 800 |
| Molten Metal Composition: | Any Metal Having C Solubility | Iron + Ni, Mn | Iron |
| Temperature 1st (Feed) Bath: | Melt Point of Metal | 1,200 - 2,500°C | 1,225 - 1,300°C |
| Temperature 2nd (Carbon oxide) Bath: | 50°C Above 1st Bath | 1,250 - 2,550°C | 1,275 - 1,350°C |
| $H_2$ Effluent Pressure | 1 - 200 atm | 2 - 50 atm | 15 - 35 atm |
| $CO_x$ Effluent Pressure | 1 - 200 atm | 2 - 100 atm | 15 - 50 atm |
| Δ Elevation Bath 1 - Bath 2 & Bath 3 | 0 - 100 meters | 0 - 10 meters | 1 - 3 meters |

Details as to how the apparatus is started up and molten metal is introduced into the system and initially induced to circulate are given in the text relating to Figures 4-9. Shutdown procedures are also discussed and disclosed.

**EXAMPLES**

Example 1

*(Invention Operating on Solvent Deasphalted Bottoms (SDA))*

The feed rate is 22.3 tonnes/hour of SDA bottoms. The molten iron circulation is 9,000 tonnes/hour through recycle zone **108** and 1.75 tonnes/hour of hydrogen are emitted through $H_2$ outlet **130** and 43.8 tonnes/hour of CO are emitted through CO outlet **132**. The results for this and other Examples are shown in Table A.

Example II

*(Invention with Methane Heat Balance)*

The procedure of Example 1 is followed except that methane is added to the feed for heat balance. The ratio of hydrogen to carbon monoxide in the product gas is approximately 1:1 on a molar basis.

Example 3

*(Invention With Steam Heat Balance)*

The procedure of Example 1 is followed, except that steam is added to the feed for heat balance. The ratio of hydrogen to carbon monoxide in the product gas is approximately 1:1 on a molar basis.

Example 4

*(Invention With Carbon Dioxide Heat Balance)*

The procedure of Example 1 is followed, except that carbon dioxide is added to the feed for heat balance. The ratio of hydrogen to carbon monoxide in the product gas is approximately 1:3 on a molar basis.

Example 5

*(Coal Feed to Invention)*

The procedures of Example 1 are followed except that the feed is coal and the approximate molar ratio of carbon monoxide to hydrogen is 3:1 and that 20,000 Kg/hour (44,000 pounds/hour) of steam are injected through oxidizer feed means **107** along with 10,000 Kg/hour (22,500 pounds/hour) of oxygen.

Example 6

*(Trash Fed to Invention)*

The procedures of Example 1 are followed except that the feed is mixed non-metallic trash (largely waste paper) and garbage (largely organic food residue), which is dried by using heat from the process, and the molar ratio of carbon monoxide to hydrogen is approximately 1:1.

Example 7

*(Methylene Chloride and other Chlorinated Organics Disposal)*

The procedure of Example 1 is followed except that the feed is methylene chloride, which has been contaminated and has no commercial value but represents a substantial disposal problem. Carbon monoxide and hydrogen are produced in a molar ratio of approximately 1:1.5. To neutralize the chlorine and avoid toxic emissions, 2 pounds of slaked lime CaO per pound of methylene chloride is added near the top surface of feed zone liquid level **116** and oxidizing zone liquid level **118**, and 2.5 pounds of slag per pound of methylene chloride is permitted to flow outward through an outlet (not shown) which skims the surface of feed zone liquid level **116** and oxidizing zone liquid level **118**. The slag comprises largely $CaCl_2$.

Example 8

*(Invention with Fischer- Tropsch Synthesis)*

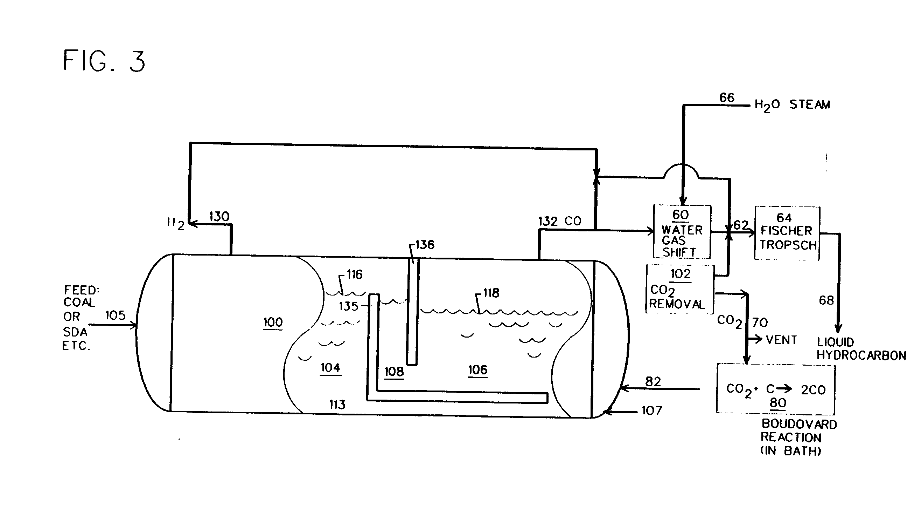

As shown in Figure 3, Example 1 is continued and some of the carbon monoxide produced is mixed with steam **66** reacted to produce $CO_2 + H_2$ in water-gas shift reactor **60**. The carbon dioxide is separated from hydrogen in $CO_2$ removal closed vessel **102**. This hydrogen and hydrogen from $H_2$ outlet **130** are mixed with the remaining CO. Then the syngas **62** is reacted in Fisher-Tropsch reactor **64** to produce Fisher-Tropsch liquids **68**. The Fischer-Tropsch liquids comprise naphtha, kerosene, and diesel fuel. By varying conditions of the Fischer-Tropsch process according to well-known techniques, the product distribution may be varied to favor naphtha or diesel, at will.

Example 9

*(Invention with Fischer-Tropsch and Boudouard)*

When the process of Example 6 is repeated, the $CO_2$ by-product from water-gas shift reactor **60** is fed to zone **106**; it reacts with carbon dissolved in the molten metal to form two moles of CO for each mole of $CO_2$ fed to zone **106**.

TABLE B

| Example | Feed, 105 | Oxygen, 107 | $H_2$,130 | CO, 132 | Molten Metal Circulation, 108 | Methanol by F-T Prod |
|---------|-----------|-------------|-----------|---------|-------------------------------|----------------------|
| | | | (Tonnes/Hour) | | | |
| I | SDA 22.3 | 25.0 | 1.75 | 43.8 | 9,000 | 25.9 |
| II | Methane *24.2 | 50 | 6.4 | 87.5 | 18,000 | 67.3 |
| III | Steam *16.3 | 10.2 | 3.5 | 43.3 | 9,000 | 35.0 |
| IV | $CO_2$ *39.8 | 10.6 | 1.75 | 69.1 | 9,000 | 35.6 |

\* plus same SDA as in Example I

Example 10

*(Circulation)*

An example of circulation is given as follows:

1. The internal diameter of both conduit **213** and **215** is 30cm (12 inches). The equivalent flow length of each of these conduits is 45m (150 feet) while the vertical distance from the bottom of the inlets to the bottom of the outlets of each conduit is 30m (100 feet).

2. The rate of carbon dissolving in the first zone is 6905 Kg/hr (15224 lbs/hr). The temperature of the first zone is 1300°C, the temperature of the second zone is 1600°C. The carbon content of the first zone is 4.5% while the carbon content of the second zone is 3.68%. This results in a density of 6997.5 Kg m$^{-3}$ (436.8 lb/foot$^3$) and a viscosity of 9 centipoise for the first zone and a density of 6763.6 Kg m$^{-3}$ (422.2 lb/foot$^3$) and a viscosity of 6 centipoise for the second zone. For the densities and vertical separation stated above, the pressure differential that results to produce flow is approximately 0.7 Kg/cm$^2$ (10.0 psi).

3. To dissolve 6905 Kg/hr (15,224 lbs/hr) of carbon in the first zone when the inlet carbon concentration in the molten iron is 3.68 wt% and the outlet carbon concentration in the molten iron is 4.00 wt%, an iron circulation rate of 2,166,000 Kg/hr (4,776,000 lb/hr) is required.

4. The pressure drop in conduit **215** due, to friction of flow is approximately 0.21 Kg/cm$^2$ (3.1 psi) while the pressure drop in conduit **213** due to friction of flow is approximately 0.22 Kg/cm$^2$ (3.2 psi). This shows that more pressure differential is available for flow than is required by the two conduits. The temperature in the second zone could be reduced or the temperature in the first zone increased to yield the desired flow rate or the system operated at a slightly higher iron circulation rate without changing the temperature of either zone.

An example of typical operation is given as follows:

1. Fifteen tons per hour of coal having the following composition are fed to the first zone:

| | |
|----------|---------|
| Carbon | 71.1 wt% |
| Hydrogen | 4.8 |
| Oxygen | 6.6 |
| Nitrogen | 1.2 |
| Sulfur | 3.9 |
| Moisture | 2.0 |
| Ash | 10.4 |

2. At this feed rate the following limestone addition rate is required to remove the sulfur contained in the incoming coal without exceeding a CaS level of 20%:

| Limestone | | | | | | |
|---|---|---|---|---|---|---|
| | mol wt. | mol/hr | mol% | Kg/hr | lb/hr | wt% |
| CaCO3 | 100.09 | 97.52 | 77.4% | 4427 | 9761 | 95% |
| Moisture | 18.02 | 28.52 | 22.6% | 233 | 513 | 5% |
| Total | | 126.04 | 100.0% | 4660 | 10274 | 100% |

3. With these addition rates, the following gas flow and composition excluding the flow and composition of gas that is used to pneumatically transport the solids in conduit **226** is produced and exits from conduit **225**:

| Gas Leaving Vessel | | | | | | |
|---|---|---|---|---|---|---|
| | mol wt. | mol/hr | mol% | Kg/hr | lb/hr | wt% |
| H2 | 2.02 | 776.2 | 66.4% | 709 | 1564 | 12.4% |
| CO | 28.01 | 380.6 | 32.5% | 4836 | 10661 | 84.7% |
| N2 | 28.01 | 12.9 | 1.1% | 163 | 360 | 2.9% |
| Total | | 1169.7 | 100.0% | 5709 | 12586 | 100.0% |

4. Consistent with a material balance, the additional amount of carbon leaving the first zone over that coming into the first zone from the second zone is:

6906 Kg/hr (15244.4 lbs/hr) or 1269.2 mol/hr

5. The quantity and composition of slag leaving the first zone is as follows:

| Species Leaving Vessel in Slag | | | | | | |
|---|---|---|---|---|---|---|
| | mol wt. | mol/hr | mol% | Kg/hr | lb/hr | wt% |
| CaS | 72.14 | 36.49 | 18.3% | 1194 | 2632 | 20.0% |
| CaO | 56.079 | 61.03 | 30.6% | 1552 | 3422 | 26.0% |
| SiO2 | 60.084 | 78.87 | 39.5% | 2149 | 4738 | 36.0% |
| Al203 | 101.96 | 23.24 | 11.6% | 1074 | 2369 | 18.0% |
| Total | | 199.63 | 100.0% | 5970 | 13163 | 100.0% |

6. The quantity and composition of cryogenic oxygen and the quantity of steam added to the second zone are as follows:

| Oxygen Fed to Lower Vessel | | | | | |
|---|---|---|---|---|---|
| | mol wt. | mol% | mol/hr | Kg/hr | lb/hr |
| Argon | 39.95 | 1.69% | 7.7 | 138 | 306.0 |
| Oxygen | 32.00 | 98.00% | 444.2 | 6447 | 14214.0 |
| Nitrogen | 28.01 | 0.31% | 1.4 | 17.5 | 38.6 |
| Total | | 100.00% | 453.2 | 6604 | 14558.6 |

| Steam Fed to Lower Vessel | | |
|---|---|---|
| mol/hr | Kg/hr | lb/hr |
| 380.8 | 3112 | 6860.1 |

7. The quantity and composition of gas leaving the second zone is as follows:

| Gas Leaving Lower Vessel | | | | | | |
|---|---|---|---|---|---|---|
| | mol wt. | mol/hr | mol% | Kg/hr | lb/hr | wt% |
| H2 | 2.02 | 380.8 | 23.0% | 348 | 767 | 2.1% |
| CO | 28.01 | 1269.2 | 76.5% | 16125 | 35551 | 97.0% |
| N2 | 28.01 | 1.4 | 0.1% | 17.8 | 39 | 0.1% |
| Ar | 39.948 | 7.7 | 0.5% | 139 | 306 | 0.8% |
| Total | | 1659.0 | 100.0% | 16630 | 36663 | 100.0% |

Example 11

*(Invention with Cooling Jacket)*

A variation of this invention consists in installing a cooling jacket between the refractory and the steel wall of all or part of the system. The cooling rate could be adjusted so that a layer of solidified slag or iron would form on the inside wall of the refractory to prevent or reduce attack by slag or molten iron. Such an arrangement can be particularly useful in areas where molten slag contacts refractory.

Example 12

*(Invention with Coal Carbonization)*

A variation of this invention consists in using it in conjunction with a coal carbonization process. Coal carbonization destructively distills volatile hydrocarbons from coal leaving a nonvolatile residue of coke which is sometimes referred to as char. Char is primarily carbon and ash. The char is a carbonaceous feed readily soluble in the molten iron bath of the first zone.

Example 13

*(Invention Disposing of Automobile Tires)*

The invention is fed automobile tires as the carbonaceous feed to the first zone. The tires are preferably reduced in size to 0.6 cm (1/4 inch) or less and injected as with coal. This process would be particularly well suited to handle automobile tires since the steel in the cord and sidewalls would be readily converted into molten iron.

Example 14

*(Invention with Hazardous Materials)*

The invention is fed hazardous organic chemicals such as dioxin, polychlorinated biphenyls, nitriles, polyhalogenated organic compounds, and the like as all or part of the carbonaceous feed. Referring to Figures 4-9, these materials could either be injected beneath the surface of molten metal in zone 1 or injected into the upflow conduit **213**, if longer residence time at elevated temperature is desired. At temperatures above 1200°C all hazardous organic compounds rapidly and completely decompose, i.e. chemical bonds such as C-C bonds thermally break. Sulfur, chlorine and fluorine are captured by the slag. Heavy metals such as chromium, cadmium, mercury, lead, or arsenic either form an alloy with the molten iron or are captured by the slag.

Example 15

*(Invention with Limestone)*

The invention is fed spent limestone from limestone scrubbers as all or part of the source of the slag components, e.g. the calcium fed, to the first zone of Figure 9. Spent limestone from limestone scrubbers seldom contains more than 10% sulfur and at least 80% of the calcium present is either calcium oxide or calcium carbonate.

Example 16

*(Invention with Baffles)*

A variation of this invention is to add baffles made of refractory similar or identical to the lining of zones one and two to cause more desirable flow patterns in either the first or second zone of Figure 9.

Example 17

*(Invention with Electromagnetic Pump)*

The invention of Figure 10 used with an electromagnetic pump for primary movement of the molten iron or as a means of controlling the flow rate of molten iron. These types of pumps were developed for circulating liquid metal coolant in breeder reactors in the nuclear power industry. A pump of this type capable of producing a sufficient differential pressure can be used in this application so that the first zone and second zone are or can be at the same or nearly the same elevations. The electromagnetic pump would allow the second zone to operate at whatever pressure is required to produce synthesis gas for downstream processing. Electromagnetic pumps can also be used to retard flow by generating electricity.

Example 18

*(Invention Regenerating Slag)*

The invention regenerates the slag tapped from the first zone, preferably while still hot to avoid the requirement of reheating, with steam and perhaps oxygen to convert calcium sulfide in the slag to elemental sulfur, hydrogen sulfide, sulfur dioxide, or calcium oxide. Part of the slag regenerated in this fashion is preferably returned to the flux hopper **234** to reduce the amount of limestone added. Some of the slag whether regenerated or not is preferably not recycled to avoid any possible accumulation in the slag of unwanted species, such as sulfur, halogen, heavy metals and the like.

Example 19

*(Invention Using Supplemental Carbon Feed*

*Plus Methane as Primary Feed)*

This example shows the use of methane (ethane could be substituted) as the sole feed to generate hydrogen without a carbonaceous source supplemental feed. Most of the hydrogen plants disclosed in Figure 10 discloses that: the energy required to disassociate methane (and/or ethane) into carbon and hydrogen, an endothermic reaction, is not balanced by the energy that is released when carbon oxides are produced. This is true because the energy from converting carbon monoxide to carbon dioxide is usually not efficiently transferred to the molten metal, but instead escapes from the system as part of the heated gases exiting through conduit **338** connected to second-zone **315**. Essentially, hydrogen is produced in first-zone **314** and carbon oxides are produced in second-zone **315**.

Also shown in this example is the necessity that the circulation rate must be at least 25 pounds of iron for each pound of carbon dissolved from any feeds introduced into hydrogen plant **312** or hydrogen plant 112 of Figures 2 and 3.

With reference to Figure 10, the following is a brief discussion of steady-state operation of a preferred embodiment of this invention.

The most straightforward way to understand the steady-state operation of the molten metal gasifier of this invention is to consider the relationship of the various energy and material inputs and outputs of the system.

At steady-state operation, with respect to energy balance considerations, the rate at which hydrocarbons thermally dissociate to hydrogen and carbon (with the carbon dissolving in the molten metal) in vessel **312**, the first zone, determines the heat requirement for vessel **312**. This heat requirement is satisfied by the reduction in temperature of the molten metal entering vessel **312**. This must be counterbalanced by the exothermic reaction of carbon dissolved in the molten metal in vessel **314** being oxidized to carbon monoxide. The exothermic reaction in vessel **314** is accommodated by the molten metal leaving at a temperature higher than its entering temperature. For the entire system to remain at steady-state several simultaneous requirements must balance.

First, the net heat requirements in vessel **312**. Any system heat losses and the heat required to heat all of the feeds to the system to its operating temperature must be balanced by the heat released in vessel **314**.

Second, the rate of molten metal circulation must be such that the difference in carbon concentration between entering and leaving molten metal multiplied by the mass flow rate of molten metal is equal to the net carbon feed rate to vessel **312**. Molten iron has a maximum carbon solubility of approximately 4.2% by weight at 1200°C. At higher carbon contents the melting point of the iron carbon solution increases rapidly. At approximately 6% by weight no more carbon is soluble at any temperature. The minimum carbon content which would result if all of the carbon entering vessel **314** were oxidized is 0. While 0 represents the extreme lower limit the actual practical limit is somewhat higher. This limit will be discussed later. This means that the minimum molten metal circulation rate is 23.8 Kg (1/(.042-0) or 23.8 Kg) of molten metal per kilogram of carbon.

Third, the density differences in conduits **322** and **324** must be sufficient to establish and maintain the desired circulation rate of molten metal. The density difference between conduits **322** and **324** results in part from temperature difference, from difference in carbon content and from the gas content of the molten metal in each of the two conduits.

If sulfur or other undesirable contaminants are percent in the feed the sulfur will form hydrogen sulfide and exit with the gas leaving vessel **314**. For most uses the hydrogen sulfide is unacceptable. In most applications where it is present in refinery streams it is removed by special absorption systems. With the instant invention it is possible to add certain fluxing compounds which contain calcium carbonate or calcium oxide. The fluxing compounds form a layer of molten slag which floats on top of the molten metal. The calcium contained in the fluxing compounds reacts to form calcium oxide at the temperature of vessel **314**. Calcium oxide reacts with sulfur in the molten metal forming calcium sulfide which remains in the slag layer. Higher carbon contents in the molten metal favor the reaction of sulfur in the molten metal reacting with the slag layer. Flux and slag may be periodically or continuously added and or withdrawn.

Because the molar ratio of hydrogen to carbon increases as the carbon number of paraffin gases decreases the endothermic heat required per mol of carbon is highest for methane and next highest for ethane. More heat is required by the endothermic heat of reaction for the dissociation of methane and ethane than is produced by the combustion of the carbon contained in them to carbon monoxide. It is not possible to realize the heat generated by reacting the carbon to carbon dioxide because when carbon monoxide forms it rapidly exits the molten metal bath. If sufficient oxygen is present to allow the formation of carbon dioxide this formation occurs in the gas space **383** above the molten metal layer and does not heat the molten metal. The primary result of oxidizing carbon monoxide to carbon dioxide is to increase the temperature of the gas leaving vessel **314**. It is not practical to heat the incoming streams above 815°C (1500°F) due to heat exchanger material limitations. It is unlikely that a higher temperature in the exit gas would be of much benefit.

A critical feature of the instant invention is that when gaseous feeds to vessel **314** do not have sufficient carbon to allow the system to operate in heat balance, high carbon content feeds such as solvent deasphalted pitch are added with the gaseous feeds so that the system is in heat balance. If excess high carbon containing feeds are added in the feed, steam is added to vessel **315** to form hydrogen and carbon monoxide, an exothermic reaction, to keep the system in heat balance.

The pressure in vessel **314** may range from just over atmospheric pressure (14.7 psia) to in excess of 400 psia. The upper pressure is not limited by any major consideration except the economic balance between the extra cost of higher pressure rated vessels compared to the savings in compression cost realized by producing hydrogen at a higher pressure. At a pressure greater than 400 psia the chemical equilibrium between methane, hydrogen and carbon results in the hydrogen purity in the gas leaving vessel **314** dropping below 95% when the temperature in vessel **314** is 1370°C (2500°F).

Operating temperature is constrained by the limits of the refractory linings in vessels **314, 315**, and **316** and the increase in heat loss as the temperature increases. The combination of high temperature, high feed rates and high molten metal circulation rates result in more rapid erosion rates for the refractory linings. Heat exchange of the feed gases in vessel **314** and the oxygen and steam in vessel **315** with the hot exiting gases is desirable. Feed - effluent heat exchange is constrained by the cost of heat exchange equipment on the one hand and the savings resulting from greater thermal efficiency on the other. Molten metal circulation rates must be at least 24 Kg molten metal/Kg carbon (24 lbs molten metal per lb carbon). The most desirable circulation rate is in the range of 100 to 1,000 Kg. (lbs) molten metal per Kg. (lb) carbon.

Referring to Figure 10, the following details illustrate the above concepts with specific operating conditions. For this case the feed consists of pure methane. This is in no way intended to limit the range of hydrocarbon feeds which can be processed but rather is chosen for illustrative purposes. The feed rate chosen is 16 grams per hour. This is approximately the molecular weight of methane in grams, a rate of 16 tones per hour could have just as easily been chosen. Approximately 4 grams of the methane form hydrogen, the balance, 14 grams form carbon which dissolves in the molten metal. For the purposes of this example the feed methane is heated to 760°C by heat exchange with the hydrogen exiting vessel **315**. The heat necessary for the endothermic reaction described above and the heat necessary to raise the methane to reaction temperature, in this case 1250°C, is approximately 72,000 cal. In the second zone **316**, the 12 grams of carbon are oxidized to carbon monoxide by oxygen which has been heat exchanged with the exiting carbon monoxide to 760°C. The heat produced by this reaction less the heat necessary to heat the oxygen to operating conditions, in this case 1291°C, is approximately 62,000 calories. Additional heat loses in the system are dependent on the particulars of the system. In this example a value of 10,000 calories will be used.

The system is not in heat balance because 72,000 calories are required in vessel 15, 10,000 calories are lost by the system and only 62,000 calories are produced in vessel **316**. The deficit is approximately 20,000 calories. By adding an additional 13 grams of high carbon content feed to vessel **314**, 15,000 calories of heat are required in vessel **314**, however, 62,000 additional calories are generated in vessel **316** resulting in an excess of heat. This allows a quantity of steam to be added to vessel **316** resulting in an endothermic reaction of steam with carbon to produce hydrogen and carbon monoxide. The rate of steam addition can be varied to keep the system in heat balance.

When flux is added to vessel **314**, additional heat is required to heat the flux to operating temperature. The rate of flux addition is determined by the feed rate of high carbon content material multiplied by its sulfur content and by the efficiency of the slag in reacting with sulfur. As more flux is added to vessel **314** less steam is added to vessel **316** to keep the system in heat balance.

## Claims

1. A method of producing hydrogen- and carbon monoxide-containing gases from a carbon- and hydrogen-containing feed material, by pyrolysis of the feed material in a bath of molten metal, comprising

   a) establishing baths of molten metal in each of two zones, a feed zone and an oxidation zone, each of the two zones comprising a gas collection zone above the bath of molten metal, said gas collection zones being separate one from the other, and comprising as the molten metal, a metal having a degree of solubility towards carbon;
   b) establishing a circulatory flow of molten metal between the two zones based on the differential density of the molten metal in the two zones, the hotter, less dense metal flowing from the oxidation zone to the feed zone and the cooler, more dense metal flowing from the feed zone to the oxidation zone;
   c) introducing the organic carbon-containing feed material into the molten metal in the feed zone;
   d) pyrolising the feed material in the bath of molten metal in the feed zone to produce a hydrogen-containing gas in the gas collection zone above the bath of molten metal in the feed zone, and elemental carbon dissolved in the molten metal in the feed zone;
   e) recovering the hydrogen-containing gas from the gas collection zone above the bath of molten metal in the feed zone;
   f) introducing an oxygen-containing gas and optionally steam into the molten metal in the oxidation zone thereby to oxidise the dissolved carbon entering into the oxidation zone in solution in the molten metal passing into the oxidation zone from the feed zone to produce a carbon monoxide-containing gas in the gas collection zone above the bath of molten metal in the oxidation zone, and sufficient exothermic heat of reaction to raise the temperature and lower the density of the molten metal in the oxidation zone; and
   g) recovering the carbon monoxide-containing gas from the gas collection zone above the bath of molten metal in the said oxidation zone.

2. A method according to claim 1, wherein the molten metal is molten iron.

3. A method according to claim 1 or 2, wherein the temperature of the molten metal bath in the feed zone is maintained in the range 1150 to 1600°C, preferably 1250 to 1500°C.

4. A method according to any one of the preceding claims, wherein the temperature of the molten metal bath in the oxidation zone is maintained at a temperature from 50 to 150°C higher than that in the feed zone.

5. A method according to claim 2, wherein the pressure in the feed zone is maintained at a value in the range 0 to 103.43kPa above atmospheric (0 to 15psig), the pressure in the oxidation zone is maintained in the range 172.38kPa to 20.69MPa above atmospheric (25 to 3000psig), and the temperature of the molten metal in the feed zone is maintained in the range 1147 to 1800°C.

6. A method according to claim 2, wherein the dissolved carbon content of the molten metal in the feed zone is from 1 to 4%.

7. A method according to any one of the preceding claims, wherein a slag forming material, preferably crushed limestone, is added to the feed in the feed zone and the method includes a slag removal step.

8. A method according to any one of claims 1 to 7, wherein the baths of molten metal are established in a common reaction vessel divided internally into said zones by an internal baffle system comprising:

a first baffle extending downwardly from the top of the vessel a sufficient distance to extend into the mass of molten metal contained in the reaction vessel and dividing the vessel interiorly into the feed zone on one side of the baffle and the oxidation zone on the other, and dividing the space above the molten metal in the reaction vessel into the two separate gas collection zones;

a second L-shaped baffle positioned on the feed zone side of the first baffle and forming therewith a riser chimney between the two baffles for the upward flow of low density metal from the oxidation zone to the feed zone and providing an upper lip over which the rising low density molten metal flows from the riser chimney into the feed zone, the lower limb of the L-shaped baffle extending under the bottom edge of the said first baffle and being spaced therefrom so as to provide a gap therebetween and through which gap the low density molten metal flows from the oxidation zone into the said riser chimney between the two baffles, and being spaced from the bottom of the reaction vessel so as to provide a return channel for the high density molten metal to flow from the feed zone, under the first baffle, to the oxidation zone thus completing the circulation of the molten metal between the two zones.

9. A method according to any one of claims 1 to 7, wherein the baths of molten metal are established in two separate reaction vessels located one above the other, each with its own gas collection zone above the bath of molten metal established in that vessel, the two reaction vessels being interconnected by a riser conduit and by a return conduit permitting, respectively, the low density metal to rise by virtue of its low density from the lower of the two reaction vessels, wherein it is treated with said oxygen-containing gas and optionally steam thereby to effect the exothermic oxidation of the dissolved carbon in the molten metal, to the upper of the two reaction vessels, wherein it is injected with said feed material, and the high density, metal in the upper of the two reaction vessels to return under gravity to the lower of the two reaction vessels thus completing the circulation of the molten metal between the two zones.

10. A method according to claim 9, wherein there is provided on the downstream side of the flow path between the two reaction vessels, a third reaction vessel, and wherein there is maintained in that third reaction vessel a bath of the said molten metal on route from the lower to the upper of the two reaction vessels, the molten metal therein being treated with a stream of methane or ethane to produce essentially pure hydrogen in the third reaction vessel, and recovering that essentially pure hydrogen as a further product of the process.

11. A method according to any one of the preceding claims, wherein added temperature control is provided by introducing into the molten metal in the oxidation zone a stream of carbon dioxide, preferably produced from the hydrogen- and carbon monoxide-containing product streams by subjecting a portion those streams to the water shift reaction in a water shift reactor, that stream of carbon dioxide reacting in the oxidation zone with the carbon dissolved in the molten metal, thereby producing, by means of the Boudovard reaction, additional carbon monoxide for accumulation in and recovery from the gas collection space in the oxidation zone.

12. A method according to any one of the preceding claims, wherein the hydrogen-containing and carbon monoxide-containing product streams are further processed, after recovery, that further processing comprising the step or steps of reacting those product streams in a Fischer-Tropsch reactor to produce a product Fischer-Tropsch liquid.

13. An apparatus for producing gases from feed material by the method of claim 8, the apparatus comprising an elongate enclosed reactor vessel (100) divided internally into two separate reaction zones (104,106) at opposite ends of the reactor by an internal baffle system (112,114,115) and, in use, containing a mass of the specified molten metal;

the said baffle system comprising a first baffle (112) downwardly dependent from the top of the reactor vessel (100) a sufficient distance that, in use, the bottom edge of the baffle extends into the mass of molten metal whilst stopping short of the bottom of the vessel, thereby to permit the underflow of molten metal from one zone (104) to the other (106) under the distal edge of the baffle, the said first baffle (112) also serving also to divide the upper region of the reactor vessel above the level of the molten metal into two separate gas collection zones, and a second, L-shaped baffle (135) having a first leg (114) parallel to but spaced from the first baffle (112) so as to form therewith a vertical chimney (108) for the return upward flow of molten metal from the said other zone (106) back to the said first zone (104), the said first leg (114) having an upper distal edge spaced from the top of the reactor vessel and providing a lip over which the molten metal flows back into the first zone (104) from the second zone (106), the second leg (115) of the L-shaped baffle projecting from the bottom distal edge of the first leg (114) substantially parallel to the base of the reactor under the bottom distal edge of the first baffle (112) but spaced therefrom, and from the base of the reactor, so as to form with the bottom distal edge of the first baffle (112) a through channel for the throughflow of said molten metal from said second zone (106) into said chimney (108) and hack to the first zone, and forming with the base of the reactor vessel a second through channel for the said underflow of molten metal from the first zone (104) to the second zone (106);

the reactor vessel further comprising feed means (105) for feeding the organic carbon-containing feed material into the molten metal in the said first zone (104), feed means (107) for feeding an oxygen-containing gas into the molten metal in the said second zone (106), venting means (130 ) for recovering a stream of hydrogen-containing synthesis gas from the gas collection zone located above the molten metal contained in the first reaction zone (104), and venting means (132) for recovering a stream of carbon monoxide-containing synthesis gas from the gas collection zone located above the molten metal in the second reaction zone (106).

14. An apparatus for producing gases from feed material by the method of claim 9, said apparatus comprising a pair of enclosed reaction vessels (212,214) spaced one above the other and each containing, in use, a bath of the said molten metal with a gas collection zone thereabove (275,277), said reaction vessels being connected one to the other by a pair of conduits (213,215) each providing a flow passage for the circulatory flow of metal between the two reaction vessels (212,214), one (215) acting as a riser conduit and the other (213) a return conduit, means (226) for feeding the organic carbon-containing feed material into the molten metal bath contained in the upper of the two reaction vessels (212), means (222) for feeding an oxygen-containing gas into the molten metal bath contained in the lower of the two reaction vessels (214), venting means (283) for recovering a hydrogen-containing gas from the gas collection zone (275) in the upper of the two reaction vessels (212), and venting means (281) for recovering a carbon monoxide-containing gas from the gas collection zone (277) in the lower of the two reaction vessels (214).

15. Apparatus according to claim 14, additionally comprising means (238,245) for feeding a slag forming material into the molten metal bath contained in the upper reaction vessel (212) and means (253) for removing the slag from the surface of the molten metal in that reaction vessel.

16. Apparatus according to claim 14 or 15, wherein each of the reaction vessels (212,214) comprises one or more upstanding baffles (266,268) projecting upwardly from the base of the vessel into the bath of molten metal to promote mixing of the molten metal as it flows through the reaction vessel.

17. Apparatus according to claim 14, 15 or 16, wherein the lower of the two reaction vessels (214) additionally comprises means (224) for feeding an additional reactive gas stream, eg steam, to the molten metal bath contained in the vessel.

18. Apparatus according to claim 14, 15, 16 or 17, additionally comprising a third reaction vessel (315) connected in the return conduit (318,322) between the two reaction vessel (314,316) and containing, in use, a third bath of the molten metal, said third reaction vessel (315) likewise having means (396) for feeding oxygen or hydrocarbon containing reactive gas stream(s) into the bath of molten metal in that third reaction vessel, and venting means (338) for recovering a further stream of gas from the gas collection zone (390) in that third reaction vessel above the bath of molten metal therein.

**Patentansprüche**

1. Verfahren zur Herstellung von wasserstoff- und kohlenmonoxidhaltigen Gasen aus kohlenstoff- und wasserstoffhaltigem Ausgangsmaterial durch Pyrolyse des Ausgangsmaterials in einem Bad aus geschmolzenem Metall, umfassend

(a) Schaffen von Bädern aus geschmolzenem Metall mit je zwei Zonen, eine Beschickungszone und eine Oxidationszone, wobei die beiden Zonen jeweils eine Gassammelzone oberhalb des Bades aus geschmolzenem Metall aufweisen und die Gassammelzonen voneinander getrennt sind und wobei die Bäder als geschmolzenes Metall ein Metall mit einem Grad von Löslichkeit für Kohlenstoff aufweisen;
(b) Schaffen eines zirkulierenden Flusses von geschmolzenem Metall zwischen den beiden Zonen, aufgrund des Dichtegradienten des geschmolzenen Metalls in den beiden Zonen, wobei das wärmere, weniger dichte Metall von der Oxidationszone zu der Beschickungszone fließt und das kühlere, dichtere Metall von der Beschickungszone zu der Oxidationszone fließt;

(c) Zugeben des organischen kohlenstoffhaltigen Ausgangsmaterials zu dem geschmolzenen Metall in der Beschickungszone;

(d) Pyrolyse des Beschickungsmaterials in dem Bad aus geschmolzenem Metall in der Beschickungszone, um wasserstoffhaltiges Gas in der Gassammelzone oberhalb des Bades aus geschmolzenem Metall in der Beschickungszone und elementaren Kohlenstoff, der in dem geschmolzenen Metall in der Beschickungszone gelöst ist, zu erzeugen;

(e) Gewinnen des wasserstoffhaltigen Gases aus der Gassammelzone oberhalb des Bades aus geschmolzenem Metall in der Beschickungszone;

(f) Einleiten von sauerstoffhaltigen Gas und gegebenenfalls Dampf in das geschmolzene Metall in der Oxidationszone, um den gelösten Kohlenstoff; der in dem geschmolzenen Metall, welches von der Beschickungszone in die Oxidationszone gelangt, gelöst in die Oxidationszone eintritt, zu oxidieren, um Kohlenmonoxid enthaltendes Gas in der Gassammelzone oberhalb des Bades aus geschmolzenem Metall in der Oxidationszone und ausreichende exotherme Reaktionswärme zu erzeugen, um die Temperatur des geschmolzenen Metalls in der Oxidationszone zu erhöhen und dessen Dichte zu verringern; und

(g) Gewinnen des Kohlenmonoxid enthaltenden Gases aus der Gassammelzone oberhalb des Bades aus geschmolzenem Metall in der Oxidationszone.

2. Verfahren nach Anspruch 1, wobei das geschmolzene Metall geschmolzenes Eisen ist.

3. Verfahren nach Anspruch 1 oder 2, wobei die Temperatur des Bades aus geschmolzenem Metall in der Beschickungszone im Bereich von 1150 bis 1600°C, bevorzugt 1250 bis 1500°C, gehalten wird.

4. Verfahren nach einem der vorstehenden Ansprüche, wobei die Temperatur des Bades aus geschmolzenem Metall in der Oxidationszone bei einer Temperatur von 50 bis 150°C höher als diejenige in der Beschickungszone gehalten wird.

5. Verfahren nach Anspruch 2, wobei der Druck in der Beschickungszone bei einem Wert im Bereich von 0 bis 103,43 kPa über Atmosphärendruck (0 bis 15 psig) gehalten wird, der Druck in der Oxidationszone im Bereich von 172,38 kPa bis 20,69 MPa über Atmosphärendruck (25 bis 3000 psig) gehalten wird und die Temperatur des geschmolzenen Metalls in der Beschickungszone im Bereich von 1147 bis 1800°C gehalten wird.

6. Verfahren nach Anspruch 2, wobei der Gehalt an gelöstem Kohlenstoff in dem geschmolzenen Metall in der Beschickungszone 1 bis 4 % beträgt.

7. Verfahren nach einem der vorstehenden Ansprüche, wobei ein Schlackenbildungsmittel, bevorzugt zerstoßener Kalkstein, zu dem Ausgangsmaterial in der Beschickungszone zugegeben wird und das Verfahren einen Schlakkenentfernungsschritt beinhaltet.

8. Verfahren nach einem der Ansprüche 1 bis 7, wobei die Bäder aus geschmolzenem Metall in einem gemeinsamen Reaktionsbehälter geschaffen werden, der intern in die Zonen durch ein internes Scheidewandsystem unterteilt wird, umfassend:

eine erste Scheidewand, die von dem oberen Ende des Behälters eine ausreichende Strecke nach unten erstreckt, um in die in dem Reaktionsbehälter enthaltene Masse des geschmolzenen Metalls hinein zu reichen und um den Behälter im Inneren in die Beschickungszone auf der einen Seite der Scheidewand und die Oxidationszone auf der anderen Seite zu unterteilen und um den Raum oberhalb des geschmolzenen Metalls in dem Reaktionsbehälter in die beiden separaten Gassammelzonen zu unterteilen;

eine zweite L-förmige Scheidewand, die auf der Beschickungsseite der ersten Scheidewand positioniert ist und die damit, zwischen den beiden Scheidewänden, eine Steigleitung für den nach oben gerichteten Fluß des Metalls mit der niedrigen Dichte von der Oxidationszone zu der Beschickungszone erzeugt und die eine obere Gießlippe zur Verfügung stellt, über die das aufsteigende, geschmolzene Metall mit der niedrigen Dichte aus der Steigleitung in die Beschickungszone fließt, und wobei sich der untere Arm der L-förmigen Scheidewand unter den unteren Rand der ersten Scheidewand erstreckt und in einem Abstand davon ist, um eine Lücke dazwischen zur Verfügung zu stellen, durch die das geschmolzene Metall mit der niedrigen Dichte von der Oxidationszone in die Steigleitung zwischen den beiden Scheidewänden fließt, und wobei der untere Arm in einem Abstand von dem Boden des Reaktionsbehälters ist, um einen Rückführungskanal für das geschmolzene Metall mit der hohen Dichte zur Verfügung zu stellen, welches von der Beschickungszone unter der ersten Scheidewand hindurch in die Oxidationszone fließt, wobei die Zirkulation des geschmolzenen Metalls zwischen den beiden Zonen vervollständigt wird.

9. Verfahren nach einem der Ansprüche 1 bis 7, wobei die Bäder aus geschmolzenem Metall in zwei separaten Reaktionsbehältern, die übereinander angeordnet sind, geschaffen werden, wobei jedes seine eigene Gassammelzone oberhalb des Bades aus geschmolzenem Metall, das in demjenigen Behälter geschaffen ist, hat, und wobei die beiden Reaktionsbehälter durch einen Steigkanal und einen Rückführhrkanal verbunden sind, die jeweils erlauben, daß das Metall mit der niedrigen Dichte aufgrund seiner niedrigen Dichte von dem unteren der beiden Reaktionsbehälter, in dem es mit dem Sauerstoff enthaltenden Gas und gegebenenfalls Dampf behandelt wird, um die exotherme Oxidation des gelösten Kohlenstoffs in dem geschmolzenen Metall zu bewirken, in das obere der beiden Reaktionsbehälter steigt, in dem das Metall mit der niedrigen Dichte zusammen mit dem Beschickungsmaterial zugegeben wird, und daß das Metall mit der hohen Dichte in dem oberen der beiden Reaktionsbehälter unter Einfluß der Schwerkraft in das untere der beiden Reaktionsbehälter zurückkehrt, wobei die Zirkulation des geschmolzenen Metalls zwischen den beiden Zonen vervollständigt wird.

10. Verfahren nach Anspruch 9, wobei auf der Rückflußseite des Strömungsweges zwischen den beiden Reaktionsbehältern ein dritter Reaktionsbehälter zur Verfügung gestellt wird und wobei in dem dritten Reaktionsbehälter ein Bad aus geschmolzenem Metall auf dem Weg von dem unteren zu dem oberen der beiden Reaktionsbehälter gehalten wird und wobei das geschmolzene Metall darin mit einem Strom aus Methan oder Ethan behandelt wird, um im wesentlichen reinen Wasserstoff in dem dritten Reaktionsbehälter zu erzeugen und den im wesentlichen reinen Wasserstoff als ein weiteres Produkt des Verfahrens zu gewinnen.

11. Verfahren nach einem der vorstehenden Ansprüche, wobei zusätzliche Temperaturregulierung durch Einleiten eines Kohlendioxidstromes in das geschmolzene Metall in der Oxidationszone bereitgestellt wird, bevorzugt wird das Kohlendioxid aus den wasserstoff- und kohlenmonoxidhaltigen Produktströmen hergestellt, indem ein Teil dieser Ströme der Wasser-Konvertierungsreaktion in einem Wasser-Konvertierungsreaktor unterworfen wird und der Strom aus Kohlendioxid, welches in der Oxidationszone mit dem Kohlenstoff, der in dem geschmolzenen Metall gelöst ist, reagiert, wodurch mittels der Boudouardreaktion zusätzliches Kohlenmonoxid zur Anreicherung in und zum Gewinnen aus der Gassammelzone in der Oxidationszone erzeugt wird.

12. Verfahren nach einem der vorstehenden Ansprüche, wobei die wasserstoffhaltigen und kohlenmonoxidhaltigen Produktströme nach der Gewinnung weiterbehandelt werden, wobei die weitere Behandlung den Schritt oder die Schritte Umsetzen dieser Produktströme in einem Fischer-Tropsch-Reaktor umfaßt, um ein flüssiges Fischer-Tropsch-Produkt herzustellen.

13. Vorrichtung zur Herstellung von Gasen aus Ausgangsmaterial nach dem Verfahren von Anspruch 8, wobei:

die Einrichtung einen länglichen, geschlossenen Reaktorbehälter (100)afweist, der intern durch ein internes Scheidewandsystem (112, 114, 115) in zwei separate Reaktionszonen (104, 106) an gegenüberliegenden Enden des Reaktors unterteilt ist, und der im Gebrauch eine Masse des angegebenen geschmolzenen Metalls enthält;
das Scheidewandsystem eine erste Scheidewand (112) umfaßt, die sich von dem oberen Ende des Reaktorbehälters (100) eine ausreichende Strecke nach unten erstreckt, so daß im Gebrauch das untere Ende der Scheidewand in die Masse des geschmolzenen Metalls hineinreicht, aber kurz oberhalb des Behälterbodens aufhört, wobei der Unterfluß des geschmolzenen Metalls von der einen Zone (104) zu der anderen (106) unter dem distalen Rand der Scheidewand möglich ist und die erste Scheidewand (112) zudem zum Unterteilen des oberen Bereichs des Reaktorbehälters in zwei separate Gassammelzonen oberhalb des Pegels des geschmolzenen Metalls dient, und das Scheidewandsystem eine zweite L-förmige Scheidewand (135) mit einem ersten Arm (114) parallel zu, aber in einem Abstand von der ersten Scheidewand (112) aufweist, so daß ein vertikaler Kamin (108) für den nach oben gerichteten Rückfluß des geschmolzenen Metalls von der anderen Zone (106) zurück zu der ersten Zone (104) gebildet wird und der erste Arm (114) weist einen oberen distalen Rand auf, der sich in einem Abstand von dem oberen Ende des Reaktorbehälters befindet und der eine Gießlippe zur Verfügung stellt, über die das geschmolzene Metall in die erste Zone (104) aus der zweiten Zone (106) zurückfließt, und der zweite Arm (115) der L-förmigen Scheidewand ragt von dem unteren distalen Rand des ersten Armes (114) im wesentlichen parallel zu dem Boden des Reaktors unter dem unteren distalen Rand der ersten Scheidewand (112) heraus, aber in einem Abstand hiervon und in einem Abstand von dem Boden des Reaktors, um mit dem unteren distalen Rand der ersten Scheidewand (112) einen Durchflußkanal für den Durchfluß des geschmolzenen Metalls von der zweiten Zone (106) in den Kamin (108) und zurück zu der ersten Zone zu bilden und um mit dem Boden des Reaktorbehälters einen zweiten Durchflußkanal für den Unterfluß des geschmolzenen Metalls aus der ersten Zone (104) in die zweite Zone (106) zu bilden;

der Reaktorbehälter weiterhin aufweist: eine Beschickungseinrichtung (105) zum Zugeben von organischen kohlenstoffhaltigem Ausgangsmaterial zu dem geschmolzenen Metall in der ersten Zone (104), Beschickungseinrichtung (107) zum Zugeben von sauerstoffhaltigem Gas zu dem geschmolzenen Metall in der zweiten Zone (106), eine Belüftungseinrichtung (130) zum Gewinnen eines Stroms aus wasserstoffhaltigem Synthesegas aus der Gassammelzone, die sich oberhalb des geschmolzenen Metalls, das in der ersten Reaktionszone (104) enthalten ist, befindet, und eine Belüftungseinrichtung (132) zum Gewinnen eines Stroms aus kohlenmonoxidhaltigem Synthesegas aus der Gassammelzone, die sich oberhalb des geschmolzenen Metalls in der zweiten Reaktionszone (106) befindet.

14. Vorrichtung zur Herstellung von Gasen aus Ausgangsmaterial nach dem Verfahren von Anspruch 9, umfassend:

zwei geschlossene Reaktionsbehälter (212, 214), die übereinander angeordnet sind und jeweils im Gebrauch ein Bad des geschmolzenen Metalls mit einer darüberliegenden Gassammelzone (275, 277) aufweisen, wobei die Reaktionsbehälter durch zwei Kanäle (213, 215) miteinander verbunden sind, die jeweils einen Stömungsweg für den zirkulierenden Fluß von Metall zwischen den beiden Reaktionsbehältern (212, 214) zur Verfügung stellen, wobei der eine (215) als Steigleitung und der andere (213) als Rückleitung dient;

eine Einrichtung (226), um das organischen kohlenstoffhaltige Ausgangsmaterial zu dem Bad aus geschmolzenem Metall, das in dem oberen der beiden Reaktionsbehälter (212) enthalten ist, zuzugeben, eine Einrichtung (222), um sauerstoffhaltiges Gas in das Bad aus geschmolzenem Metall, das in dem unteren der beiden Reaktionsbehälter (212) enthalten ist, einzuleiten;

eine Belüftungseinrichtung (283) zum Gewinnen eines wasserstoffhaltigen Gases aus der Gassammelzone (275) in dem oberen der beiden Reaktionsbehälter (212); und

eine Belüftungseinrichtung (281) zum Gewinnen eines kohlenmonoxidhaltigen Gases aus der Gassammelzone (277) in dem unteren der beiden Reaktionsbehälter (214).

15. Vorrichtung nach Anspruch 14, weiterhin umfassend Einrichtungen (238, 245) zum Zugeben eines schlackenbildenden Materials zu dem Bad aus geschmolzenem Metall, das in dem oberen Reaktionsbehälter (212) enthalten ist und eine Einrichtung (253) zum Entfernen der Schlacke von der Oberfläche des geschmolzenen Metalls in dem Reaktionsbehälter.

16. Vorrichtung nach Anspruch 14 oder 15, wobei jeder der Reaktionsbehälter (212, 214) eine oder mehrere aufrechte Scheidewände (266, 268) umfaßt, die von dem Boden des Behälters in das Bad aus geschmolzenem Metall nach oben ragen, um die Durchmischung des geschmolzenen Metalls, wenn es durch den Reaktionsbehälter fließt, zu unterstützen.

17. Vorrichtung nach Anspruch 14, 15, oder 16, wobei der untere der beiden Reaktionsbehälter (214) weiterhin eine Einrichtung (224) zum Zugeben eines zusätzlichen reaktiven Gasstroms, z.B. Dampf, zu dem Bad aus geschmolzenem Metall, das in dem Behälter enthalten ist, umfaßt.

18. Vorrichtung nach Anspruch 14, 15, 16 oder 17, weiterhin umfassend:

einen dritten Reaktionsbehälter (315), der in die Rückleitung (318, 322) zwischen den beiden Reaktionsbehältern (314, 316) eingefügt ist und der im Gebrauch ein drittes Bad aus dem geschmolzenen Metall beinhaltet, und wobei der dritte Reaktionsbehälter (315) ebenfalls eine Einrichtung (396) zum Zugeben eines oder mehrerer sauerstoff- oder kohlenwasserstoffhaltige reaktiver Gasströme zu dem Bad aus geschmolzenem Metall in dem dritten Reaktionsbehälter aufweist; und

eine Belüftungseinrichtung (338) zum Gewinnen eines weiteren Gasstroms aus der Gassammelzone (390) in dem dritten Reaktionsbehälter oberhalb des darin enthaltenen Bades aus geschmolzenem Metall.

**Revendications**

1. Procédé de production de gaz contenant de l'hydrogène et du monoxyde de carbone à partir d'une matière d'alimentation contenant du carbone et de l'hydrogène, au moyen d'une pyrolyse de la matière d'alimentation dans un bain de métal à l'état fondu, comprenant les étapes de :

a) définir des bains de métal à l'état fondu dans chacune de deux zones, une zone d'alimentation et une zone d'oxydation, chacune des deux zones comprenant une zone de recueil des gaz au-dessus du bain de métal à l'état fondu, lesdites zones de recueil des gaz étant séparées l'une de l'autre, et comprenant en tant que métal à l'état fondu, un métal ayant un degré de solubilisation du carbone ;

b) définir un écoulement circulatoire de métal à l'état fondu entre les deux zones en se basant sur la densité différentielle du métal à l'état fondu dans les deux zones, le métal plus chaud, moins dense s'écoulant de la zone d'oxydation vers la zone d'alimentation et le métal plus froid, moins dense s'écoulant de la zone d'alimentation vers la zone d'oxydation ;

c) introduire la matière d'alimentation contenant du carbone organique dans le métal à l'état fondu dans la zone d'alimentation ;

d) pyrolyser la matière d'alimentation dans le bain de métal à l'état fondu dans la zone d'alimentation afin de produire un gaz contenant de l'hydrogène dans la zone de recueil des gaz au-dessus du bain de métal à l'état fondu dans la zone d'alimentation, et du carbone élémentaire dissous dans le métal à l'état fondu dans la zone d'alimentation ;

e) récupérer le gaz contenant de l'hydrogène à partir de la zone de recueil des gaz au-dessus du bain de métal à l'état fondu dans la zone d'alimentation ;

f) introduire un gaz contenant de l'oxygène et éventuellement de la vapeur d'eau dans le métal à l'état fondu dans la zone d'oxydation pour oxyder ainsi le carbone dissous entrant dans la zone d'oxydation en solution dans le métal à l'état fondu et passant dans la zone d'oxydation à partir de la zone d'alimentation afin de produire un gaz contenant du monoxyde de carbone dans la zone de recueil des gaz au-dessus du bain du métal à l'état fondu dans la zone d'oxydation, et une chaleur de réaction suffisamment exothermique pour élever la température et abaisser la densité du métal à l'état fondu dans la zone d'oxydation ; et

g) récupérer le gaz contenant du monoxyde de carbone à partir de la zone de recueil des gaz au-dessus du bain de métal à l'état fondu dans ladite zone d'oxydation.

2. Procédé selon la revendication 1, dans lequel le métal à l'état fondu est du fer à l'état fondu.

3. Procédé selon la revendication 1 ou 2, dans lequel la température du bain de métal à l'état fondu dans la zone d'alimentation est maintenue dans la plage de 1 150 à 1 600°C, de préférence de 1 250 à 1 500°C.

4. Procédé selon l'une quelconque des revendications précédentes, dans lequel la température du bain de métal à l'état fondu dans la zone d'oxydation est maintenue à une température de 50 à 150°C supérieure à celle dans la zone d'alimentation.

5. Procédé selon la revendication 2, dans lequel la pression dans la zone d'alimentation est maintenue à une valeur dans la plage de 0 à 103,43kPa au-dessus de la pression atmosphérique (0 à 15psi au manomètre), la pression de la zone d'oxydation est maintenue dans la plage de 172,38kPa à 20,69MPa au-dessus de la pression atmosphérique (25 à 3 000psi au manomètre), et la température du métal à l'état fondu de la zone d'alimentation est maintenue dans la plage de 1 147 à 1 800°C.

6. Procédé selon la revendication 2, dans lequel la teneur en carbone dissous du métal à l'état fondu dans la zone d'alimentation est de 1 à 4%.

7. Procédé selon l'une quelconque des revendications précédentes, dans lequel une matière formant un laitier, de préférence du calcaire concassé, est ajoutée à la charge d'alimentation dans la zone d'alimentation et le procédé comprend une étape d'élimination du laitier.

8. Procédé selon l'une quelconque des revendications 1 à 7, dans lequel les bains de métal à l'état fondu sont définis dans un récipient de réaction commun et divisé de façon interne en lesdites zones à l'aide d'un système interne de chicanes comprenant :

une première chicane s'étendant vers le bas à partir du sommet du récipient sur une distance suffisante afin de s'étendre dans la masse de métal à l'état fondu contenue dans le récipient de réaction et divisant à l'intérieur le récipient en la zone d'alimentation d'un côté de la chicane et en la zone d'oxydation de l'autre, et divisant l'espace au-dessus du métal à l'état fondu dans le récipient de réaction en les deux zones séparées de recueil des gaz ;

une deuxième chicane en forme de L disposée sur le côté de la zone d'alimentation de la première chicane formant avec celle-ci une cheminée de montée entre les deux chicanes pour l'écoulement ascensionnel du métal à faible densité provenant de la zone d'oxydation vers la zone d'alimentation et offrant une lèvre supérieure sur laquelle s'écoule le métal à l'état fondu montant de faible densité en provenance de la cheminée de montée dans la zone d'alimentation, la branche inférieure de la chicane en forme de L s'étendant sous le bord inférieur de ladite première chicane et étant espacée de celle-ci de sorte à offrir un intervalle entre celles-ci et à travers lequel le métal à l'état fondu de faible densité s'écoule de la zone d'oxydation dans ladite cheminée de montée entre les deux chicanes, et étant espacé du fond du récipient de réaction de sorte à fournir un canal de retour pour le métal à l'état fondu de haute densité s'écoulant de la zone d'alimentation, sous la première chicane, vers la zone d'oxydation achevant ainsi la circulation du métal à l'état fondu entre les deux zones.

9. Procédé selon l'une quelconque des revendications 1 à 7, dans lequel les bains de métal à l'état fondu sont définis dans deux récipients de réaction séparés situés l'un au-dessus de l'autre, chacun ayant sa propre zone de recueil des gaz au-dessus du bain de métal à l'état- fondu défini dans ce récipient, les deux récipients de réaction étant interconnectés par une conduite montante et par une conduite de retour permettant respectivement au métal de faible densité de monter en vertu de sa faible densité à partir du plus bas des deux récipients de réaction, dans lequel il est traité avec ledit gaz contenant de l'oxygène et éventuellement de la vapeur d'eau afin d'effectuer ainsi l'oxydation exothermique du carbone dissous dans le métal à l'état fondu, vers le plus élevé des deux récipients de réaction, dans lequel il est injecté avec ladite matière d'alimentation, et le métal à densité élevée dans le plus élevé des deux récipients de réaction retourne par gravité vers le plus bas des deux récipients de réaction, achevant ainsi la circulation du métal à l'état fondu entre les deux zones.

10. Procédé selon la revendication 9, dans lequel il est prévu sur le côté en aval du chemin d'écoulement entre les deux récipients de réaction, un troisième récipient de réaction, et dans lequel est maintenu, dans ce troisième récipient de réaction, un bain dudit métal à l'état fondu en route du plus bas vers le plus élevé des deux récipients de réaction, le métal à l'état fondu y étant traité avec un courant de métal ou d'éthane afin de produire essentiellement de l'hydrogène pur dans le troisième récipient de réaction, et en récupérant cet hydrogène essentiellement pur en tant que produit supplémentaire du procédé.

11. Procédé selon l'une quelconque des revendications précédentes, dans lequel une régulation de température complémentaire est prévue en introduisant dans le métal à l'état fondu dans la zone d'oxydation, un courant de dioxyde de carbone, de préférence produit à partir des courants de produit contenant de l'hydrogène et du monoxyde de carbone en soumettant une portion de ces courants à la réaction de conversion par eau dans un réacteur de conversion par eau, ce courant de dioxyde de carbone réagissant dans la zone d'oxydation avec le carbone dissous dans le métal à l'état fondu, produisant ainsi, au moyen de la réaction de Boudovard, du monoxyde de carbone supplémentaire pour l'accumuler dans l'espace de recueil des gaz dans la zone d'oxydation et pour l'y récupérer.

12. Procédé selon l'une quelconque des revendications précédentes, dans lequel les courants de produits contenant de l'hydrogène et contenant du monoxyde de carbone sont encore traités, après récupération, ce traitement complémentaire comprenant l'étape ou les étapes consistant à faire réagir ces courants de produits dans un réacteur de Fischer-Tropsch afin de produire un produit liquide de Fischer-Tropsch.

13. Appareil pour produire des gaz à partir d'une matière d'alimentation à l'aide du procédé selon la revendication 8, l'appareil comprenant un récipient de réaction allongé, clos (100), divisé de façon interne en deux zones de réaction séparées (104, 106) aux extrémités opposées du réacteur par un système interne de chicanes(112, 114, 115) et, en utilisation, contenant une masse du métal à l'état fondu spécifié ;

ledit système de chicanes comprenant une première chicane (112) inclinée vers le bas partant du sommet du récipient de réacteur (100) sur une distance suffisante de sorte qu'à l'utilisation, le bord inférieur de la chicane s'étend dans la masse du métal à l'état fondu tout en s'interrompant avant le fond du récipient, permettant ainsi l'écoulement par-dessous du métal à l'état fondu d'une zone (104) à l'autre (106) sous le bord distal de la chicane, ladite première chicane (112) servant également à diviser la région supérieure du récipient de réacteur au-dessus du métal à l'état fondu en deux zones séparées de recueil des gaz, et une deuxième chicane en forme de L (135) ayant une première branche (114) parallèle à la première chicane (112) mais espacée de celle-ci de sorte à former avec celle-ci une cheminée verticale (108) pour l'écoulement ascendant de retour du métal à l'état fondu provenant de ladite autre zone (106) vers ladite première zone (104), ladite première branche (114) ayant un bord distal supérieur espacé du sommet de récipient de réacteur et offrant une lèvre sur laquelle le métal à l'état fondu reflue vers la première zone (104) en provenance de la deuxième zone (106), la deuxième branche(115) de la chicane en forme de L se projetant à partir du bord distal inférieur de la première branche (114), de façon essentiellement parallèle à la base du réacteur sous le bord distal inférieur de la première chicane (112) mais espacé de celui-ci, et à partir de la base du réacteur, de sorte à former avec le bord distal inférieur de la première chicane (112) un canal de traversée pour l'écoulement dudit métal à l'état fondu passant de ladite deuxième zone (106) dans ladite cheminée (108) et retournant vers la première zone, et formant avec la base du récipient de réacteur un deuxième canal de traversée pour ledit sous-écoulement du métal à l'état fondu de la première zone (104) vers la deuxième zone (106) ;

le récipient de réacteur comprenant de plus des moyens d'alimentation (105) pour introduire la matière d'alimentation contenant du carbone organique dans le métal à l'état fondu dans ladite première zone (104), des moyens d'alimentation (107) pour introduire un gaz contenant de l'oxygène dans le métal à l'état fondu dans ladite deuxième zone (106), des moyens de ventilation (130) pour récupérer un courant de gaz de synthèse contenant de l'hydrogène provenant de la zone de recueil des gaz située au-dessus du métal à l'état fondu contenu dans la première zone de réaction (104), et des moyens de ventilation (132) pour récupérer un courant de gaz de synthèse contenant du monoxyde de carbone provenant de la zone de recueil des gaz située au-dessus du métal à l'état fondu dans la deuxième zone de réaction (106).

14. Appareil pour produire des gaz à partir d'une matière d'alimentation à l'aide du procédé selon la revendication 9, ledit appareil comprenant une paire de récipients de réaction clos (212, 214), espacés l'un au-dessus de l'autre et contenant chacun, à l'utilisation, un bain dudit métal à l'état fondu avec une zone de recueil des gaz au-dessus (275, 277), lesdits récipients de réaction étant reliés l'un à l'autre par une paire de conduites (213, 215) offrant chacune un passage d'écoulement pour l'écoulement circulatoire du métal entre les deux récipients de réaction (212, 214), l'une (215) faisant office de conduite montante et l'autre (213) de conduite de retour, des moyens (226) pour introduire la matière d'alimentation contenant du carbone organique dans le bain de métal à l'état fondu contenu dans le plus élevé des deux récipients de réaction (212), des moyens (222) pour introduire un gaz contenant de l'oxygène dans le bain de métal à l'état fondu contenu dans le plus bas des deux récipients de réaction (214), des moyens de ventilation (283) pour récupérer un gaz contenant de l'hydrogène provenant de la zone de recueil des gaz (275) dans le plus élevé des deux récipients de réaction (212), et des moyens de ventilation (281) pour récupérer un gaz contenant du monoxyde de carbone provenant de la zone de recueil des gaz (277) dans le plus bas des deux récipients de réaction (214).

15. Appareil selon la revendication 14, comprenant de plus des moyens (238, 245) pour introduire une matière formant un laitier dans le bain de métal à l'état fondu contenu dans le récipient de réaction supérieur (212) et des moyens (253) pour éliminer le laitier de la surface du métal à l'état fondu dans ce récipient de réaction.

16. Appareil selon la revendication 14 ou 15, dans lequel chacun des récipients de réaction (212, 214) comprend une plusieurs chicanes verticales (266, 268) qui se projettent vers le haut partant de la base du récipient dans le bain de métal à l'état fondu afin de favoriser un mélange du métal à l'état fondu à mesure qu'il traverse le récipient de réaction.

17. Appareil selon les revendications 14, 15 ou 16, dans lequel le plus bas des deux récipients de réaction (214) comprend de plus des moyens (224) pour introduire un courant supplémentaire de gaz réactif, par exemple de la vapeur d'eau, dans le bain de métal à l'état fondu contenu dans le récipient.

18. Appareil selon les revendication 14, 15 ,16 ou 17, comprenant de plus un troisième récipient de réaction (315) relié dans la conduite de retour (318, 322) entre les deux récipients de réaction (314, 316) et contenant, à l'utilisation, un troisième bain du métal à l'état fondu, ledit troisième récipient de réaction (315) possédant de même des moyens (396) pour introduire un ou des courants de gaz réactifs contenant de l'oxygène ou des hydrocarbures dans le bain de métal à l'état fondu dans ce troisième récipient de réaction, et des moyens de ventilation (338) pour récupérer un courant supplémentaire de gaz provenant de la zone de recueil des gaz (390) dans ce troisième récipient de réaction au-dessus du bain de métal à l'état fondu dans celui-ci.

FIG. 1

EP 0 655 084 B1

FIG. 2

EP 0 655 084 B1

# FIG. 3

EP 0 655 084 B1

34

Fig 4

Fig 5

Fig 6

Fig 7

Fig 8

Fig 9

Fig 10